# EUROPEAN PATENT APPLICATION

(11) **EP 4 679 893 A1**
(43) Date of publication of application: **14.01.2026**
(21) Application number: 24767116.7
(22) Date of filing: 04.03.2024
(51) Int. Cl.: H04W 36/30, H04W 4/38, H04W 36/38, H04W 76/14, H04W 84/18, H04W 92/18

(54) **COMMUNICATION SYSTEM AND BASE STATION**

(30) Priority: 07.03.2023 JP 2023034465
(71) Applicant: Mitsubishi Electric Corporation, Tokyo 100-8310 (JP)
(72) Inventor: SHIMODA, Tadahiro, Tokyo 100-8310 (JP); MOCHIZUKI, Mitsuru, Tokyo 100-8310 (JP)
(74) Representative: Mewburn Ellis LLP
(86) International application number: PCT/JP2024/008130
(87) International publication number: WO 2024/185748

(57) **Abstract**

A communication system includes a base station configured to be compatible with a 5th generation radio access system, a communication terminal configured to be connected to the base station, and a device configured to be connected to the base station or the communication terminal, in which, in a state where the device is connected to the communication terminal, the base station acquires information on a state of communication between the communication terminal and the device and information on a state of reception of a signal transmitted by the device at another communication terminal different from the communication terminal, determines whether or not it is necessary to switch a destination communication terminal to which the device is connected, based on one or both of the acquired information on the state of communication and the acquired information on the state of reception, and determines a switching target communication terminal when it is necessary to switch the destination communication terminal to which the device is connected.

## Description

### TECHNICAL FIELD

The present disclosure relates to a radio communication technology.

### BACKGROUND ART

In the 3rd Generation Partnership Project (3GPP), which is a standardization organization for mobile communication systems, a 5th generation (hereinafter, may be referred to as "5G") radio access system has been studied (see, for example, Non Patent Document 2) as a successor to Long Term Evolution (LTE) and Long Term Evolution Advanced (LTE-A), which is one of 4th generation radio access systems (see Non Patent Document 1). The 5G radio access technology is referred to as "new radio access technology" (commonly called "New Radio" or "NR"). An NR system has been studied based on an LTE system and an LTE-A system.

For example, in Europe, an organization called METIS has compiled the requirements for 5G (see Non Patent Document 3). The requirements for the 5G radio access system include, relative to the LTE system, a 1,000-fold increase in system capacity, a 100-fold increase in data transmission speed, a reduction of data processing latency to one-fifth, and a 100-fold increase in the number of simultaneously connected communication terminals, for achieving further reduction in power consumption and reduction in equipment costs (see Non Patent Document 3).

In order to satisfy such requirements, in 3GPP, the standardization of 5G has been studied (see Non Patent Documents 4 to 23).

As an NR access method, orthogonal frequency division multiplexing (OFDM) is used in a downlink direction, and OFDM and discrete Fourier transform-spread-OFDM (DFT-s-OFDM) are used in an uplink direction. In addition, the 5G system does not incorporate circuit switching and relies only on a packet communication method, similar to LTE and LTE-A.

Higher frequencies can be used in NR than in LTE for improving the transmission speed and reducing the processing latency.

In NR, which may use higher frequencies compared to LTE, cell coverage is secured by forming a narrow beam-shaped transmission and reception range (beamforming) and changing the beam's direction (beam sweeping).

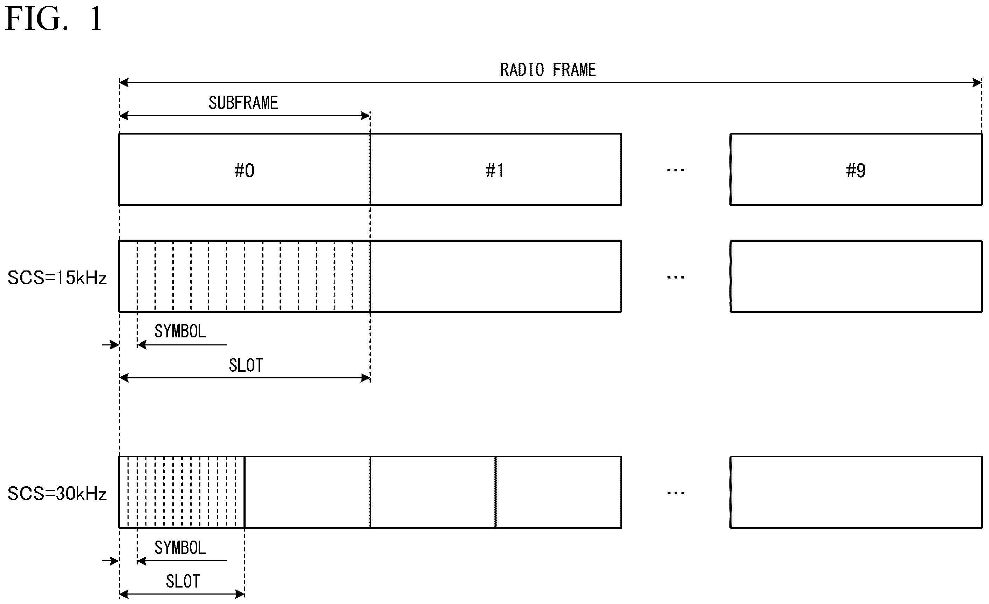

Decisions regarding a frame configuration in the NR system in 3GPP, which are described in Non Patent Document 1 (Chapter 5), will be described with reference to FIG. 1. FIG. 1 is an explanatory diagram showing a configuration of a radio frame used in an NR-based communication system. In FIG. 1, one radio frame is 10 ms. The radio frame is divided into 10 subframes having the same size. In the frame configuration in NR, one or a plurality of numerologies, that is, a plurality of subcarrier spacings (SCS) are supported. In NR, regardless of the subcarrier spacing, one subframe is 1 ms, and one slot is composed of 14 symbols. In addition, the number of slots included in one subframe is one when the subcarrier spacing is 15 kHz, and the number of slots corresponding to other subcarrier spacings increases in proportion to the subcarrier spacing (see Non Patent Document 11 (3GPP TS 38.211)).

Decisions regarding a channel configuration in the NR system in 3GPP are described in Non Patent Document 2 (Chapter 5) and Non Patent Document 11.

A physical broadcast channel (PBCH) is a channel for downlink transmission from a base station device (hereinafter, may be simply referred to as a "base station") to a communication terminal device (hereinafter, may be referred to as a "communication terminal" or a "terminal"), such as a mobile terminal device (hereinafter, may be simply referred to as "user equipment"). The PBCH is transmitted together with a downlink synchronization signal.

The downlink synchronization signal in NR includes a primary synchronization signal (P-SS) and a secondary synchronization signal (S-SS). The synchronization signals are transmitted from the base station with a predetermined period and a predetermined duration as a synchronization signal burst (hereinafter, may be referred to as an SS burst). The SS burst is composed of a synchronization signal block (hereinafter, may be referred to as an SS block) for each beam of the base station.

The base station transmits the SS block of each beam by changing the beam within the duration of the SS burst. The SS block is composed of the P-SS, the S-SS, and the PBCH.

A physical downlink control channel (PDCCH) is a channel for downlink transmission from the base station to the communication terminal. The PDCCH carries downlink control information (DCI). The DCI includes resource allocation information of a downlink shared channel (DL-SCH), which is one of transport channels described below, resource allocation information of a paging channel (PCH), which is one of the transport channels described below, hybrid automatic repeat request (HARQ) information on the DL-SCH, and the like. In addition, an uplink scheduling grant may be included in the DCI. The DCI may include an acknowledgement (Ack)/negative acknowledgement (Nack) which is a response signal to the uplink transmission. Further, in order to flexibly switch between the DL and the UL in the slot, the DCI may include a slot format indication (SFI). The PDCCH or the DCI is also referred to as an L1/L2 control signal.

In NR, a time/frequency area as a candidate including the PDCCH is provided. This area is referred to as a control resource set (CORESET). The communication terminal monitors the CORESET and acquires the PDCCH.

A physical downlink shared channel (PDSCH) is a channel for downlink transmission from the base station to the communication terminal. The downlink shared channel (DL-SCH) as the transport channel and the PCH as the transport channel are mapped to the PDSCH.

A physical uplink control channel (PUCCH) is a channel for uplink transmission from the communication terminal to the base station. The PUCCH carries uplink control information (UCI). The UCI includes an Ack/Nack, channel state information (CSI), a scheduling request (SR), and the like, which are response signals to the downlink transmission. The CSI is composed of rank indicator (RI), precoding matrix indicator (PMI), and channel quality indicator (CQI) reports. The RI is rank information of a channel matrix in multiple input multiple output (MIMO). The PMI is information on a precoding weight matrix used in MIMO. The CQI is quality information indicating a quality of the received data or a quality of a communication path. The UCI may be carried by a PUSCH described below. The PUCCH or the UCI is also referred to as the L1/L2 control signal.

The physical uplink shared channel (PUSCH) is a channel for uplink transmission from the communication terminal to the base station. An uplink shared channel (UL-SCH), which is one of the transport channels, is mapped to the PUSCH.

A physical random access channel (PRACH) is a channel for uplink transmission from the communication terminal to the base station. The PRACH carries a random access preamble.

A downlink reference signal (reference signal (RS)) is a known symbol in the NR-based communication system. Four types of downlink reference signals are defined as below. The four types of downlink reference signals include a demodulation reference signal (DM-RS) as a UE-specific reference signal, a phase tracking reference signal (PT-RS), a positioning reference signal (PRS), and a channel state information reference signal (CSI-RS). The measurements of the physical layer of the communication terminal include reference signal received power (RSRP) measurement and reference signal received quality (RSRQ) measurement.

Similarly, an uplink reference signal is a known symbol in the NR-based communication system. Three types of uplink reference signals are defined as below. The three types of uplink reference signals include a demodulation reference signal (DM-RS), a phase tracking reference signal (PT-RS), and a sounding reference signal (SRS).

A transport channel described in Non Patent Document 2 (Chapter 5) will be described. Among downlink transport channels, a broadcast channel (BCH) is broadcast throughout the entire coverage of the base station (cell). The BCH is mapped to the physical broadcast channel (PBCH).

Retransmission control in accordance with an HARQ is applied to the downlink shared channel (DL-SCH). The DL-SCH can be broadcast throughout the entire coverage of the base station (cell). The DL-SCH supports dynamic or semi-static resource allocation. The semi-static resource allocation is also referred to as semi-persistent scheduling. The DL-SCH supports discontinuous reception (DRX) of the communication terminal in order to reduce power consumption of the communication terminal. The DL-SCH is mapped to the physical downlink shared channel (PDSCH).

The paging channel (PCH) supports the DRX of the communication terminal in order to enable low power consumption of the communication terminal. The PCH is required to be broadcast throughout the entire coverage of the base station (cell). The PCH is mapped to a physical resource such as the physical downlink shared channel (PDSCH) that can be dynamically used for traffic.

Among uplink transport channels, the retransmission control in accordance with the HARQ is applied to the uplink shared channel (UL-SCH). The UL-SCH supports dynamic or semi-static resource allocation. The semi-static resource allocation is also referred to as a configured grant. The UL-SCH is mapped to the physical uplink shared channel (PUSCH).

A random access channel (RACH) is limited to control information. The RACH has a risk of contention. The RACH is mapped to the physical random access channel (PRACH).

The HARQ will be described. The HARQ is a technology for improving the communication quality of the transmission path by a combination of automatic repeat request (ARQ) and forward error correction. The HARQ has the advantage that forward error correction operates effectively even for the transmission path in which the communication quality changes, by the retransmission. In particular, it is also possible to obtain further quality improvement by combining, when retransmission, a reception result of the first transmission and a reception result of the retransmission.

An example of the retransmission method will be described. When received data cannot be correctly decoded on a reception side, in other words, when a cyclic redundancy check (CRC) error has occurred (CRC = NG), "Nack" is transmitted from the reception side to a transmission side. The transmission side that has received "Nack" retransmits the data. When the received data can be correctly decoded on the reception side, in other words, when the CRC error has not occurred (CRC = OK), "Ack" is transmitted from the reception side to the transmission side. The transmission side that has received "Ack" transmits next data.

Another example of the retransmission method will be described. When the CRC error has occurred on the reception side, the repeat request is issued from the reception side to the transmission side. The repeat request is issued by toggling a new data indicator (NDI). The transmission side that has received the repeat request retransmits the data. When the CRC error has not occurred on the reception side, the repeat request is not issued. When the transmission side has not received the repeat request for a predetermined time, the transmission side considers that the CRC error has not occurred on the reception side.

A logical channel described in Non Patent Document 1 (Chapter 6) will be described. A broadcast control channel (BCCH) is a downlink channel for broadcasting system control information. The BCCH as the logical channel is mapped to the broadcast channel (BCH) or the downlink shared channel (DL-SCH) as the transport channel.

The paging control channel (PCCH) is a downlink channel for transmitting changes of paging information and system information. The PCCH, which is the logical channel, is mapped to the paging channel (PCH) which is the transport channel.

A common control channel (CCCH) is a channel for transmitting control information between the communication terminal and the base station. The CCCH is used when the communication terminal does not have an RRC connection with a network. In the downlink direction, the CCCH is mapped to the downlink shared channel (DL-SCH), which is the transport channel. In the uplink direction, the CCCH is mapped to the uplink shared channel (UL-SCH) which is the transport channel.

A dedicated control channel (DCCH) is a channel for transmitting dedicated control information between the communication terminal and the network in a one-to-one manner. The DCCH is used when the communication terminal has the RRC connection with the network. The DCCH is mapped to the uplink shared channel (UL-SCH) in the uplink and is mapped to the downlink shared channel (DL-SCH) in the downlink.

A dedicated traffic channel (DTCH) is a channel for one-to-one communication with a communication terminal for transmission of user information. The DTCH is present both in the uplink and the downlink. The DTCH is mapped to the uplink shared channel (UL-SCH) in the uplink and is mapped to the downlink shared channel (DL-SCH) in the downlink.

The location tracking of the communication terminal is performed in units of an area consisting of one or more cells. The location tracking is performed to track the location of the communication terminal even in an idle state and to call the communication terminal, in other words, to enable the communication terminal to receive a call. The area for tracking the location of the communication terminal is referred to as a tracking area (TA).

In NR, the call of the communication terminal is supported in a range with units of an area smaller than the tracking area. This range is referred to as a RAN notification area (RNA). Paging of the communication terminal in an RRC_INACTIVE state, which will be described below, is performed in this range.

In NR, carrier aggregation (CA) in which two or more component carriers (CCs) are aggregated (also referred to as "aggregation") has been studied in order to support wide transmission bandwidths. The CA is described in Non Patent Document 1.

When the CA is configured, the UE, which is the communication terminal, has a single RRC connection with the network (NW). In the RRC connection, one serving cell provides non-access stratum (NAS) mobility information and security input. This cell is referred to as a primary cell (PCell). A secondary cell (SCell) is configured to form a set of serving cells together with the PCell in accordance with a capability of the UE. The set of serving cells consisting of one PCell and one or more SCells is configured for one UE.

In addition, in 3GPP, in order to further increase a communication capacity, there is dual connectivity (abbreviated as DC) in which the UE is connected to two base stations to perform communication. The DC is described in Non Patent Documents 1 and 22.

Among the base stations that perform dual connectivity (DC), one may be referred to as a "master node (MN)", and the other may be referred to as a "secondary node (SN)". A group of serving cells configured by the master node is collectively referred to as a master cell group (MCG), and a group of serving cells configured by the secondary node may be collectively referred to as a secondary cell group (SCG). In the DC, the primary cell in the MCG or the SCG is referred to as a special cell (SpCell or SPCell). The special cell in the MCG is referred to as the PCell, and the special cell in the SCG is referred to as a primary SCG cell (PSCell).

In addition, in NR, the base station configures a part of the carrier frequency band (hereinafter, may be referred to as a bandwidth part (BWP)) in advance for the UE, and the UE performs transmission and reception with the base station in the BWP, thereby reducing power consumption in the UE.

Further, in 3GPP, it has been studied to support a service (which may be an application) using sidelink (SL) communication (also referred to as PC5 communication) in an evolved packet system (EPS) described below and in a 5G core system (see Non Patent Documents 1, 2, and 26 to 28). In the SL communication, communication is performed between the terminals. Examples of the service using the SL communication include a vehicle-to-everything (V2X) service and a proximity-based service. In the SL communication, not only direct communication between the terminals but also communication between the UE and the NW via a relay has been proposed (see Non Patent Documents 26 and 28).

The physical channel (see Non Patent Documents 2 and 11) used in the SL will be described. A physical sidelink broadcast channel (PSBCH) carries information on synchronization with the system and is transmitted from the UE.

A physical sidelink control channel (PSCCH) carries control information from a UE for sidelink communication and V2X sidelink communication.

A physical sidelink shared channel (PSSCH) carries data from the UE for sidelink communication and V2X sidelink communication.

A physical sidelink feedback channel (PSFCH) carries HARQ feedback on the sidelink from a UE that has received the transmitted PSSCH to a UE that has transmitted the PSSCH.

The transport channel (see Non Patent Document 1) used in the SL will be described. A sidelink broadcast channel (SL-BCH) has a predetermined transport format and is mapped to the PSBCH which is the physical channel.

A sidelink shared channel (SL-SCH) supports broadcast transmission. The SL-SCH supports both UE autonomous resource selection and resource allocation scheduled by the base station. There is a risk of contention when the UE autonomous resource selection is performed, and there is no contention when a dedicated resource is allocated to the UE by the base station. Further, the SL-SCH supports dynamic link adaptation by changing transmit power, modulation, and coding. The SL-SCH is mapped to the PSSCH, which is the physical channel.

The logical channel (see Non Patent Document 2) used in the SL will be described. A sidelink broadcast control channel (SBCCH) is a sidelink channel for broadcasting sidelink system information from one UE to another UE. The SBCCH is mapped to the SL-BCH which is the transport channel.

A sidelink traffic channel (STCH) is a one-to-many sidelink traffic channel for transmitting the user information from one UE to another UE. The STCH is used only by a UE having a sidelink communication capability and a UE having a V2X sidelink communication capability. One-to-one communication between two UEs having the sidelink communication capability is also achieved by the STCH. The STCH is mapped to the SL-SCH which is the transport channel.

A sidelink control channel (SCCH) is a sidelink control channel for transmitting the control information from one UE to another UE. The SCCH is mapped to the SL-SCH which is the transport channel.

In LTE, the SL communication has been limited to broadcast only. In NR, as the SL communication, support for unicast and groupcast, in addition to the broadcast, has been studied (see Non Patent Document 27 (3GPP TS 23.287)).

In the unicast communication or the groupcast communication in the SL, the HARQ feedback (Ack/Nack), a CSI report, and the like are supported.

In addition, in 3GPP, integrated access and backhaul (IAB) in which both an access link, which is a link between the UE and the base station, and a backhaul link, which is a link between the base stations, are performed wirelessly has been studied (see Non Patent Documents 2, 20, and 29).

Some new technologies are required for mobile communication systems. For example, there is a demand for a new technology for incorporating an ultra-low power Internet-of-Things (IoT) device, such as a device having no battery or a device that can perform communication using only an energy-storage function requiring no replacement or no external recharging, into the mobile communication system. In 3GPP, discussions on such a new technology have started (Non Patent Documents 30, 31, 32, and 33).

### Citation List

### Non Patent Document

Non Patent Document 1: 3GPP TS 36.300 V17.2.0
Non Patent Document 2: 3GPP TS 38.300 V17.2.0
Non Patent Document 3: "Scenarios, requirements and KPIs for 5G mobile and wireless system", ICT-317669-METIS/D1.1
Non Patent Document 4: 3GPP TR 23.799 V14.0.0
Non Patent Document 5: 3GPP TR 38.801 V14.0.0
Non Patent Document 6: 3GPP TR 38.802 V14.2.0
Non Patent Document 7: 3GPP TR 38.804 V14.0.0
Non Patent Document 8: 3GPP TR 38.912 V16.0.0
Non Patent Document 9: 3GPP RP-172115
Non Patent Document 10: 3GPP TS 23.501 V17.6.0
Non Patent Document 11: 3GPP TS 38.211 V17.3.0
Non Patent Document 12: 3GPP TS 38.212 V17.3.0
Non Patent Document 13: 3GPP TS 38.213 V17.3.0
Non Patent Document 14: 3GPP TS 38.214 V17.3.0
Non Patent Document 15: 3GPP TS 38.321 V17.2.0
Non Patent Document 16: 3GPP TS 38.322 V17.1.0
Non Patent Document 17: 3GPP TS 38.323 V17.2.0
Non Patent Document 18: 3GPP TS 37.324 V17.0.0
Non Patent Document 19: 3GPP TS 38.331 V17.2.0
Non Patent Document 20: 3GPP TS 38.401 V17.2.0
Non Patent Document 21: 3GPP TS 38.413 V17.2.0
Non Patent Document 22: 3GPP TS 37.340 V17.2.0
Non Patent Document 23: 3GPP TS 38.423 V17.2.0
Non Patent Document 24: 3GPP TS 38.305 V17.2.0
Non Patent Document 25: 3GPP TS 23.273 V17.6.0
Non Patent Document 26: 3GPP TR 23.703 V12.0.0
Non Patent Document 27: 3GPP TS 23.287 V17.4.0
Non Patent Document 28: 3GPP TS 23.303 V17.0.0
Non Patent Document 29: 3GPP TS 38.340 V17.2.0
Non Patent Document 30: 3GPP RP-222685
Non Patent Document 31: 3GPP RP-222335
Non Patent Document 32: 3GPP RP-222126
Non Patent Document 33: 3GPP RP-222069
Non Patent Document 34: 3GPP RP-222440
Non Patent Document 35: Backscatter Communication Research Consortium, "What is Backscatter Communication", https://bere.sfe.keio.ac.jp/research/technology/backscatter-communication/
Non Patent Document 36: EPCglobal, Low Level Reader Protocol (LLRP) Version 1.1 https://gsigo2.azureedge.net/cdn/ff/7aZwEHsz5I8MM-lbIcvFNwjL90FcGGZgBU_hAjJttEE/1416474591/public/docs/epc/llrp_1_1-standard-20101013.pdf
Non Patent Document 37: EPCglobal, The Application Level Events (ALE) Specification Version 1.1.1 Part I: Core Specification https://www.gsl.org/sites/default/files/docs/epc/ale_1_1_1-standard-core-20090313.pdf

### SUMMARY OF INVENTION

### Technical Problem

In the mobile communication system, communication for various services is performed, and thus it is assumed that a large number of IoT devices such as wearable terminals and sensors will be used in the future. Therefore, it is required to use the ultra-low power IoT device, such as a device having no battery or a device that can perform communication using only an energy-storage function requiring no replacement or no external recharging. There is a demand for a new technology for incorporating such an ultra-low power IoT device into the mobile communication system. The discussion of this new technology has started in 3GPP (Non Patent Documents 30, 31, 32, and 33). However, it is conceivable that the UE that can be connected to the IoT device changes due to the movement of such an ultra-low power IoT device. Meanwhile, the procedure related to the change in the UE is not disclosed. Therefore, there is an issue that the connection with the UE is disconnected due to the movement of the IoT device, and then communication between the IoT device and the communication system cannot be executed.

In view of the above-described issues, an object of the present disclosure is to achieve a communication system that enables communication with an ultra-low power IoT device that may move.

### Solution to Problem

The present disclosure relates to a communication system including: a base station configured to be compatible with a 5th generation radio access system; a communication terminal configured to be connected to the base station; and a device configured to be connected to the base station or the communication terminal, in which, in a state where the device is connected to the communication terminal, the base station acquires information on a state of communication between the communication terminal and the device and information on a state of reception of a signal transmitted by the device at another communication terminal different from the communication terminal, determines whether or not it is necessary to switch communication terminals to which the device is connected, based on one or both of the acquired information on the state of communication and the acquired information on the state of reception, and determines a switching target communication terminal when it is necessary to switch communication terminals to which the device is connected.

### Advantageous Effects of Invention

According to the present disclosure, it is possible to achieve the communication system that enables communication with the ultra-low power IoT device that may move.

The object, characteristics, aspects, and advantages of the present disclosure will be more apparent from the following detailed description and the accompanying drawings.

### BRIEF DESCRIPTION OF DRAWINGS

[FIG. 1] An explanatory diagram showing a configuration of a radio frame used in an NR-based communication system.
[FIG. 2] A block diagram showing an overall configuration of an NR-based communication system 210 discussed in 3GPP.
[FIG. 3] A configuration diagram showing DC by base stations connected to an NG Core.
[FIG. 4] A block diagram showing a configuration of user equipment 202 shown in FIG. 2.
[FIG. 5] A block diagram showing a configuration of a base station 213 shown in FIG. 2.
[FIG. 6] A block diagram showing a configuration of a 5GC unit.
[FIG. 7] A flowchart showing an outline from a cell search to an idle operation performed by a communication terminal (UE) in the NR-based communication system.
[FIG. 8] A diagram showing an example of a cell configuration in an NR system.
[FIG. 9] A connection configuration diagram showing an example of a connection configuration of terminals in SL communication.
[FIG. 10] A connection configuration diagram showing an example of a connection configuration of base stations that support integrated access and backhaul.
[FIG. 11] A sequence diagram showing an example of an operation of switching device-connection destination UEs, which is related to communication between the UE and the device, in Embodiment 1.
[FIG. 12] A sequence diagram showing an example of an operation of switching the device-connection destination UEs and a connection destination base stations, which is related to the communication between the UE and the device, in Embodiment 2.
[FIG. 13] A sequence diagram showing another example of the operation of switching the device-connection destination UEs and the connection destination base stations, which is related to the communication between the UE and the device, in Embodiment 2.
[FIG. 14] A sequence diagram showing an example of an operation of switching the device-connection destination UEs and a connection destination DUs, which is related to the communication between the UE and the device, in Modification Example 1 of Embodiment 2.
[FIG. 15] A sequence diagram showing an example of a handover operation of the UE that performs the communication with the device, in Embodiment 3.

### DESCRIPTION OF EMBODIMENTS

### Embodiment 1.

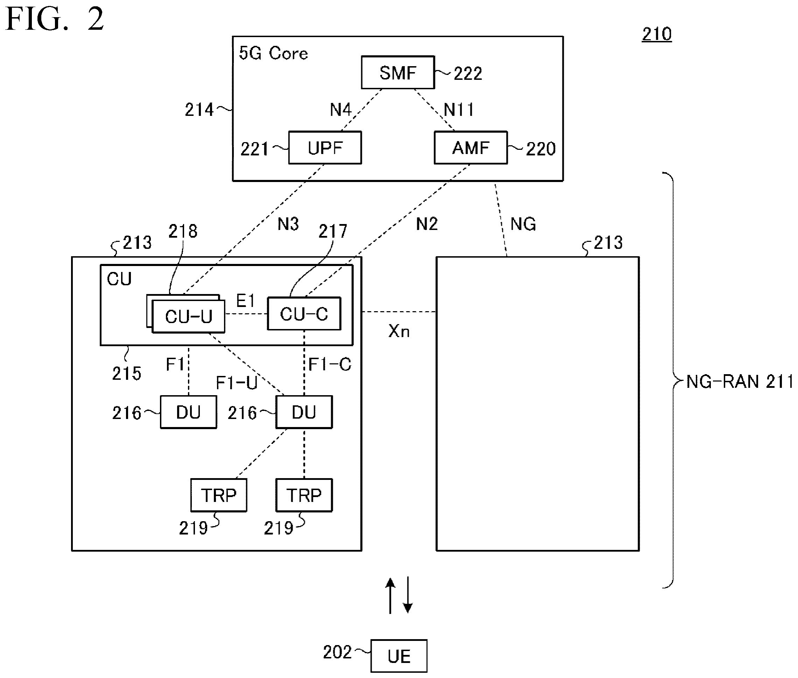

FIG. 2 is a block diagram showing an overall configuration of an NR-based communication system 210 discussed in 3GPP. FIG. 2 will be described. A radio access network is referred to as a next generation radio access network (NG-RAN) 211. A mobile terminal device (hereinafter, referred to as "user equipment (UE)") 202, which is a communication terminal device, can perform radio communication with a base station device (hereinafter, referred to as an "NG-RAN NodeB (gNB)") 213, and transmits and receives signals by radio communication. The NG-RAN 211 is composed of one or a plurality of NG-RAN NodeBs 213.

Here, the term "communication terminal device" includes not only a mobile terminal device such as a mobile phone terminal device that can move, but also a non-mobile device such as a sensor. Hereinafter, the "communication terminal device" may be simply referred to as a "communication terminal".

An access stratum (AS) protocol is terminated between the UE 202 and the NG-RAN 211. As the AS protocol, for example, radio resource control (RRC), service data adaptation protocol (SDAP), packet data convergence protocol (PDCP), radio link control (RLC), medium access control (MAC), and physical layer (PHY) are used. The RRC is used in a control plane (hereinafter, may be referred to as a C plane, a C-plane, or a CP), the SDAP is used in a user plane (hereinafter, may be referred to as a U plane, a U-plane, or a UP), and the PDCP, the MAC, the RLC, and the PHY are used in both the C plane and the U plane.

The radio resource control (RRC) protocol between the UE 202 and the NG-RAN NodeB 213 performs broadcast, paging, RRC connection management, and the like. As the states between the NG-RAN NodeB 213 and the UE 202 in the RRC, there are RRC_IDLE, RRC_CONNECTED, and RRC_INACTIVE.

In the RRC_IDLE, public land mobile network (PLMN) selection, system information (SI) broadcast, paging, cell re-selection, mobility, and the like are performed. In the RRC_CONNECTED, the user equipment has an RRC connection and can transmit and receive data to and from the network. In addition, in the RRC_CONNECTED, a handover (HO), a neighbor cell measurement, and the like are performed. In the RRC_INACTIVE, system information (SI) broadcast, paging, cell re-selection, mobility, and the like are performed while the connection between a 5G core unit 214 and the NG-RAN NodeB 213 is maintained.

The gNB 213 is connected to the 5G core unit (hereinafter, may be referred to as a "5GC unit") 214 having an Access and Mobility Management Function (AMF), a Session Management Function (SMF), a User Plane Function (UPF), and the like, through an NG interface. Control information and/or user data are communicated between the gNB 213 and the 5GC unit 214. The NG interface is a general term for an N2 interface between the gNB 213 and an AMF 220, an N3 interface between the gNB 213 and a UPF 221, an N11 interface between the AMF 220 and an SMF 222, and an N4 interface between the UPF 221 and the SMF 222. A plurality of 5GC units 214 may be connected to one gNB 213. The gNBs 213 are connected through an Xn interface, and control information and/or user data are communicated between the gNBs 213.

The 5GC unit 214 is a higher-level device, specifically, a higher-level node, and performs control of connection between the NG-RAN NodeB 213 and the user equipment (UE) 202, distribution of a paging signal to one or a plurality of NG-RAN NodeBs (gNBs) 213 and/or an E-UTRAN NodeB (eNB), and the like. Further, the 5GC unit 214 performs mobility control in an idle state. The 5GC unit 214 manages the tracking area list when the user equipment 202 is in an idle state, an inactive state, or an active state. The 5GC unit 214 transmits a paging message to a cell belonging to the tracking area to which the user equipment 202 is registered, to start a paging protocol.

The gNB 213 may constitute one or a plurality of cells. In a case where one gNB 213 constitutes a plurality of cells, each cell is configured to be communicable with the UE 202.

The gNB 213 may be divided into a central unit (hereinafter, may be referred to as CU) 215 and a distributed unit (hereinafter, may be referred to as DU) 216. One CU 215 is formed in the gNB 213. One or a plurality of DUs 216 are formed in the gNB 213. One DU 216 constitutes one or a plurality of cells. The CU 215 is connected to the DU 216 through an F1 interface, and control information and/or user data are communicated between the CU 215 and the DU 216. The F1 interface is composed of an F1-C interface and an F1-U interface. The CU 215 has functions of the RRC, SDAP, and PDCP protocols, and the DU 216 has functions of the RLC, MAC, and PHY protocols. One or a plurality of transmission reception points (TRPs) 219 may be connected to the DU 216. The TRP 219 transmits and receives radio signals to and from the UE.

The CU 215 may be divided into a CU for a C plane (CU-C) 217 and a CU for a U plane (CU-U) 218. One CU-C 217 is formed in the CU 215. One or a plurality of CU-Us 218 are formed in the CU 215. The CU-C 217 is connected to the CU-U 218 through an E1 interface, and control information is communicated between the CU-C 217 and the CU-U 218. The CU-C 217 is connected to the DU 216 through the F1-C interface, and control information is communicated between CU-C 217 and DU 216. The CU-U 218 is connected to the DU 216 through the F1-U interface, and user data is communicated between the CU-U 218 and the DU 216.

In the 5G communication system, a Unified Data Management (UDM) function and a Policy Control Function (PCF) described in Non Patent Document 10 (3GPP TS 23.501) may be included. The UDM and/or the PCF may be included in the 5GC unit 214 shown in FIG. 2.

In the 5G communication system, a Location Management Function (LMF) described in Non Patent Document 24 (3GPP TS 38.305) may be provided. The LMF may be connected to the base station through the AMF as disclosed in Non Patent Document 25 (3GPP TS 23.273).

In the 5G communication system, a Non-3GPP Interworking Function (N3IWF) described in Non Patent Document 10 (3GPP TS 23.501) may be included. The N3IWF may terminate an access network (AN) with the UE in a non-3GPP access with the UE.

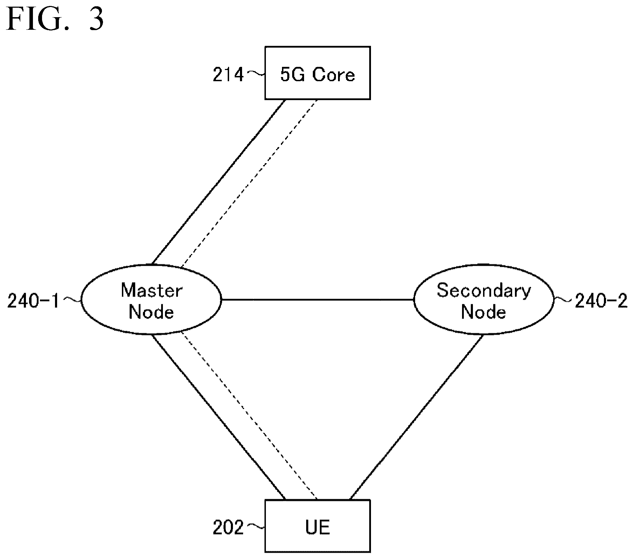

FIG. 3 is a diagram showing a configuration of dual connectivity (DC) connected to an NG Core. In FIG. 3, a solid line indicates U-Plane connection, and a broken line indicates C-Plane connection. In FIG. 3, a master node 240-1 may be a gNB or an eNB. In addition, a secondary node 240-2 may be a gNB or an eNB. For example, in FIG. 3, a DC configuration in which the master node 240-1 is the gNB and the secondary node 240-2 is the eNB may be referred to as an NG-EN-DC. In FIG. 3, an example is shown in which the U-Plane connection between the 5GC unit 214 and the secondary node 240-2 is performed via the master node 240-1, but the U-Plane connection may be directly performed between the 5GC unit 214 and the secondary node 240-2. In addition, in FIG. 3, instead of the 5GC unit 214, an evolved packet core (EPC) that is a core network connected to an LTE system and an LTE-A system may be connected to the master node 240-1. The U-Plane connection between the EPC and the secondary node 240-2 may be directly performed.

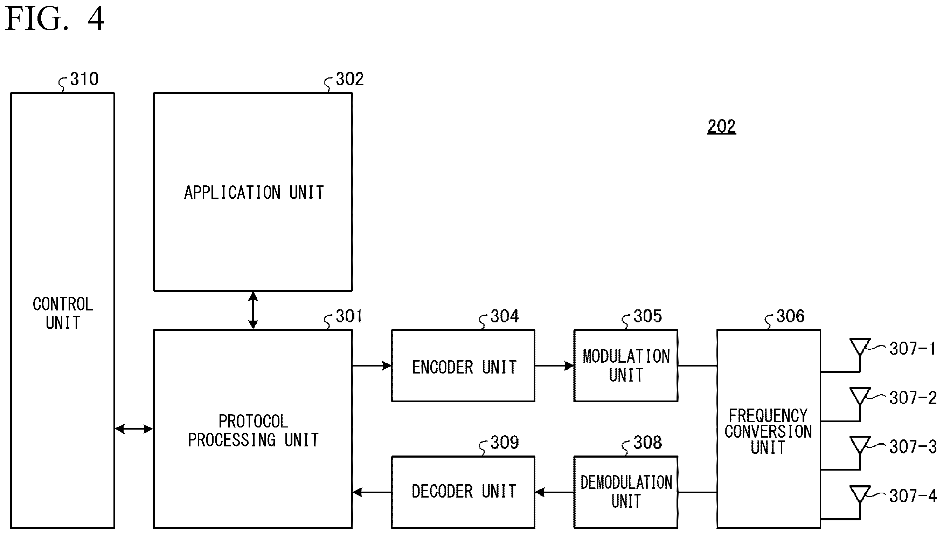

FIG. 4 is a block diagram showing a configuration of the user equipment 202 shown in FIG. 2. A transmission procedure of the user equipment 202 shown in FIG. 4 will be described. First, control data from a control unit 310 and user data from an application unit 302 are transmitted to a protocol processing unit 301. Buffering of the control data and the user data may be performed. The buffers of the control data and the user data may be provided in the control unit 310, may be provided in the application unit 302, or may be provided in the protocol processing unit 301. The protocol processing unit 301 performs protocol processing such as SDAP, PDCP, RLC, and MAC, for example, determines a transmission destination base station in DC and performs an operation such as adding a header in each protocol. The data on which the protocol processing has been performed is passed to the encoder unit 304 and subjected to encoding processing such as forward error correction. Data that is directly output from the protocol processing unit 301 to a modulation unit 305 without being subjected to the encoding processing may be present. Modulation processing is performed on the data on which the encoding processing has been performed by the encoder unit 304 in the modulation unit 305. The modulation unit 305 may perform precoding in MIMO. The modulated data is converted into a baseband signal, and then output to a frequency conversion unit 306 to be converted into a radio transmission frequency. Thereafter, the transmission signals are transmitted from antennas 307-1 to 307-4 to the base station 213. FIG. 4 shows a case where the number of antennas is four, but the number of antennas is not limited to four.

In addition, a reception procedure of the user equipment 202 is executed as follows. The radio signals from the base station 213 are received by the antennas 307-1 to 307-4. The received signal is converted from a radio reception frequency into the baseband signal by the frequency conversion unit 306, and is subjected to the demodulation processing in a demodulation unit 308. Weight calculation and multiplication processing may be performed in the demodulation unit 308. The demodulated data is passed to the decoder unit 309 and is subjected to decoding processing such as forward error correction. The decoded data is passed to the protocol processing unit 301 and is subjected to protocol processing such as MAC, RLC, PDCP, and SDAP, for example, removal of the header in each protocol. In the data on which the protocol processing has been performed, the control data is passed to the control unit 310, and the user data is passed to the application unit 302.

A series of procedures of the user equipment 202 is controlled by the control unit 310. Therefore, the control unit 310 is also connected to each of the units 302 and 304 to 309, which are not shown in FIG. 4.

Each unit of the user equipment 202, for example, the control unit 310, the protocol processing unit 301, the encoder unit 304, and the decoder unit 309 are implemented by a processing circuit including, for example, a processor and a memory. For example, the control unit 310 is implemented by the processor executing a program in which the series of procedures of the user equipment 202 is described. The program in which the series of procedures of the user equipment 202 is described is stored in the memory. Examples of the memory include a non-volatile memory and a volatile semiconductor memory, such as a random access memory (RAM), a read only memory (ROM), or a flash memory. Each unit of the user equipment 202, for example, the control unit 310, the protocol processing unit 301, the encoder unit 304, and the decoder unit 309 may be implemented by a dedicated processing circuit such as a field programmable gate array (FPGA), an application specific integrated circuit (ASIC), or a digital signal processor (DSP). In FIG. 4, the number of antennas used for transmission and the number of antennas used for reception by the user equipment 202 may be the same as or different from each other.

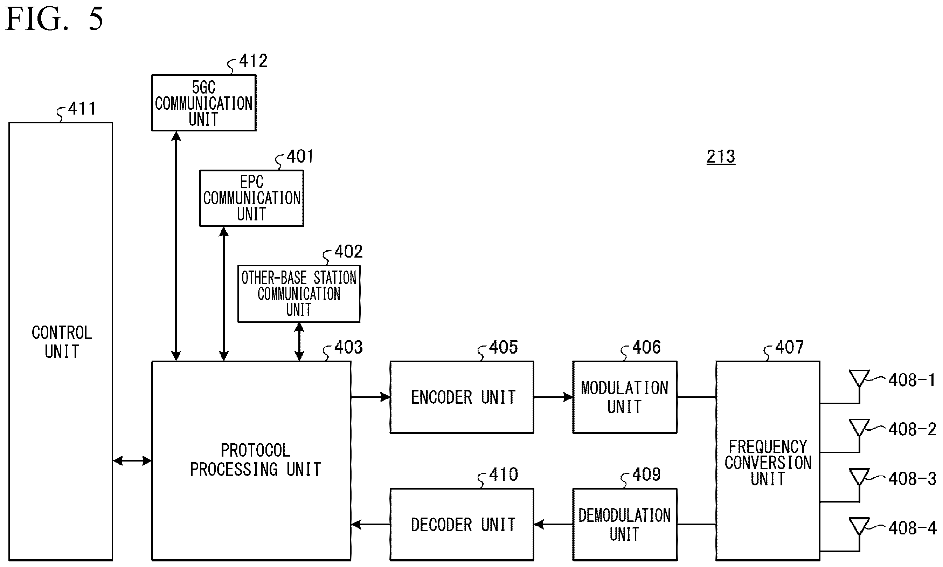

FIG. 5 is a block diagram showing a configuration of the base station 213 shown in FIG. 2. A transmission procedure of the base station 213 shown in FIG. 5 will be described. An EPC communication unit 401 transmits and receives data between the base station 213 and the EPC. A 5GC communication unit 412 transmits and receives data between the base station 213 and the 5GC (5GC unit 214 or the like). An other-base station communication unit 402 transmits and receives data to and from another base station. The EPC communication unit 401, the 5GC communication unit 412, and the other-base station communication unit 402 each perform information exchange with a protocol processing unit 403. The control data from the control unit 411 and the user data and the control data from the EPC communication unit 401, the 5GC communication unit 412, and the other-base station communication unit 402 are transmitted to the protocol processing unit 403. Buffering of the control data and the user data may be performed. The buffers of the control data and the user data may be provided in the control unit 411, may be provided in the EPC communication unit 401, may be provided in the 5GC communication unit 412, or may be provided in the other-base station communication unit 402.

The protocol processing unit 403 performs the protocol processing such as SDAP, PDCP, RLC, and MAC, for example, routing of transmission data in DC and addition of the header in each protocol. The data on which the protocol processing has been performed is passed to the encoder unit 405 and subjected to encoding processing such as forward error correction. Data that is directly output from the protocol processing unit 403 to the modulation unit 406 without being subjected to the encoding processing may be present. In addition, the data may be transmitted from the protocol processing unit 403 to the other-base station communication unit 402. For example, in DC, the data, which is transmitted from the 5GC communication unit 412 or the EPC communication unit 401, may be transmitted to another base station, for example, the secondary node via the other-base station communication unit 402. The encoded data is subjected to modulation processing by the modulation unit 406. The modulation unit 406 may perform the precoding in MIMO. The modulated data is converted into the baseband signal, and then output to a frequency conversion unit 407 to be converted into the radio transmission frequency. Thereafter, the transmission signals are transmitted from the antennas 408-1 to 408-4 to one or a plurality of pieces of the user equipment 202. FIG. 5 shows a case where the number of antennas is four, but the number of antennas is not limited to four.

In addition, a reception procedure of the base station 213 is executed as follows. The radio signals from one or a plurality of pieces of the user equipment 202 are received by the antennas 408-1 to 408-4. The received signal is converted from the radio reception frequency into the baseband signal by the frequency conversion unit 407, and is subjected to the demodulation processing in a demodulation unit 409. The demodulated data is passed to the decoder unit 410 and is subjected to the decoding processing such as forward error correction. The decoded data is passed to the protocol processing unit 403 and is subjected to protocol processing such as MAC, RLC, PDCP, and SDAP, for example, removal of a header in each protocol. In the data on which the protocol processing has been performed, the control data is passed to the control unit 411, the 5GC communication unit 412, the EPC communication unit 401, or the other-base station communication unit 402, and the user data is passed to the 5GC communication unit 412, the EPC communication unit 401, or the other-base station communication unit 402. The data, which is transmitted from the other-base station communication unit 402, may be transmitted to the 5GC communication unit 412 or the EPC communication unit 401. The data may be, for example, uplink data transmitted to the 5GC communication unit 412 or the EPC communication unit 401 via another base station in DC.

A series of procedures of the base station 213 is controlled by the control unit 411. Therefore, the control unit 411 is also connected to each of the units 401, 402, 405 to 410, and 412, which are not shown in FIG. 5.

Each unit of the base station 213, for example, the control unit 411, the protocol processing unit 403, the 5GC communication unit 412, the EPC communication unit 401, the other-base station communication unit 402, the encoder unit 405, and the decoder unit 410 are implemented by a processing circuit including a processor and a memory or a dedicated processing circuit such as an FPGA, an ASIC, or a DSP, similarly to the user equipment 202 described above. In FIG. 5, the number of antennas used for transmission and the number of antennas used for reception by the base station 213 may be the same as or different from each other.

As an example of the configuration of the CU 215 shown in FIG. 2, a configuration may be used in which a DU communication unit is provided, excluding the encoder unit 405, the modulation unit 406, the frequency conversion unit 407, the antennas 408-1 to 408-4, the demodulation unit 409, and the decoder unit 410 shown in FIG. 5. The DU communication unit is connected to the protocol processing unit 403. The protocol processing unit 403 in the CU 215 performs the protocol processing such as PDCP and SDAP.

As an example of the configuration of the DU 216 shown in FIG. 2, a configuration may be used in which a CU communication unit is provided, excluding the EPC communication unit 401, the other-base station communication unit 402, and the 5GC communication unit 412 shown in FIG. 5. The CU communication unit is connected to the protocol processing unit 403. The protocol processing unit 403 in the DU 216 performs the protocol processing such as PHY, MAC, and RLC.

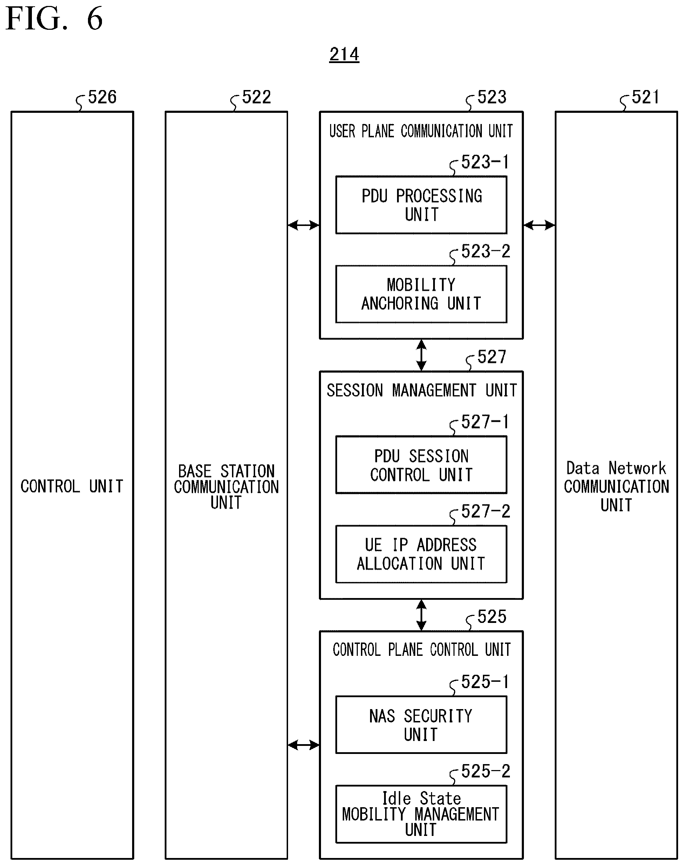

FIG. 6 is a block diagram showing a configuration of the 5GC unit. FIG. 6 shows the configuration of the 5GC unit 214 shown in FIG. 2 described above. FIG. 6 shows a case where the 5GC unit 214 shown in FIG. 2 includes the configuration of the AMF, the configuration of the SMF, and the configuration of the UPF. In the example shown in FIG. 6, the AMF may have a function of a control plane control unit 525, the SMF may have a function of a session management unit 527, and the UPF may have functions of a user plane communication unit 523 and a data network communication unit 521. The data network communication unit 521 transmits and receives data between the 5GC unit 214 and a data network. The base station communication unit 522 transmits and receives data through the NG interface between the 5GC unit 214 and the base station 213. The user data transmitted from the data network is passed from the data network communication unit 521 to the base station communication unit 522 via the user plane communication unit 523, and is transmitted to one or a plurality of base stations 213. The user data transmitted from the base station 213 is passed from the base station communication unit 522 to the data network communication unit 521 via the user plane communication unit 523, and is transmitted to the data network.

The control data transmitted from the base station 213 is passed from the base station communication unit 522 to the control plane control unit 525. The control plane control unit 525 may pass the control data to the session management unit 527. The control data may be transmitted from the data network. The control data transmitted from the data network may be transmitted from the data network communication unit 521 to the session management unit 527 via the user plane communication unit 523. The session management unit 527 may transmit the control data to the control plane control unit 525.

The user plane control unit 523 includes a PDU processing unit 523-1, a mobility anchoring unit 523-2, and the like, and performs a general procedure on the user plane (hereinafter, may be referred to as a U-plane). The PDU processing unit 523-1 performs processing of a data packet, for example, the transmission and reception of packets with the data network communication unit 521 and the transmission and reception of packets with the base station communication unit 522. The mobility anchoring unit 523-2 is responsible for anchoring a data path during UE mobility.

The session management unit 527 performs management of a PDU session provided between the UE and the UPF, and the like. The session management unit 527 includes a PDU session control unit 527-1, a UE IP address allocation unit 527-2, and the like. The PDU session control unit 527-1 manages the PDU session provided between the user equipment 202 and the 5GC unit 214. The UE IP address allocation unit 527-2 allocates an IP address to the user equipment 202 and the like.

The control plane control unit 525 includes an NAS security unit 525-1, an idle state mobility management unit 525-2, and the like, and performs a general procedure on the control plane (hereinafter, may be referred to as a C-Plane). The NAS security unit 525-1 performs security of a non-access stratum (NAS) message and the like. The idle state mobility management unit 525-2 performs mobility management in the idle state (RRC_IDLE state or simply referred to as idle), generation and control of the paging signal in the idle state, addition, deletion, update, and search of the tracking area of one or a plurality of pieces of subordinate user equipment 202, tracking area list management, and the like.

A series of procedures of the 5GC unit 214 is controlled by the control unit 526. Therefore, the control unit 526 is connected to each of the units 521 to 523, 525, and 527, which are not shown in FIG. 6. Each unit of the 5GC unit 214 is implemented by, for example, a processing circuit including a processor and a memory, or a dedicated processing circuit such as an FPGA, an ASIC, or a DSP, similarly to the control unit 310 of the user equipment 202 described above.

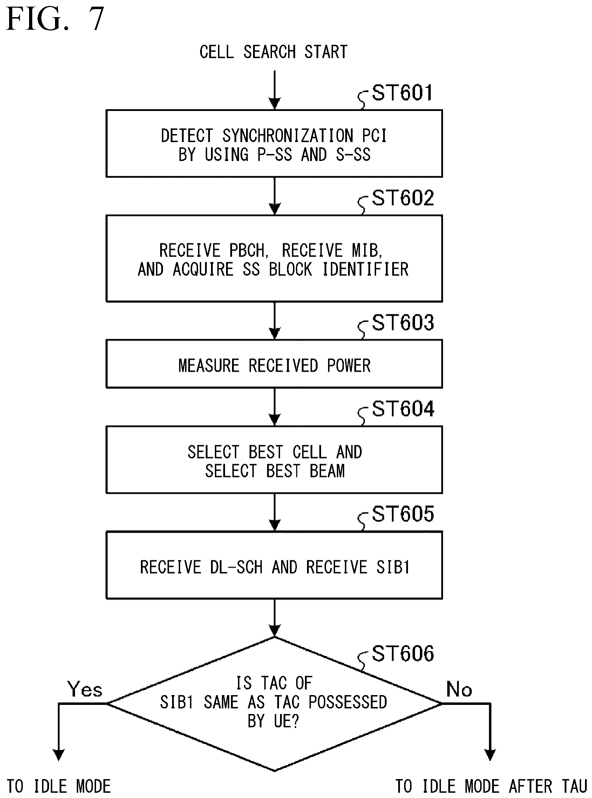

Next, an example of a cell search method in the communication system will be described. FIG. 7 is a flowchart showing an outline from the cell search to the idle operation performed by the communication terminal (UE) in the NR-based communication system. When the cell search is started, in step ST601, the communication terminal synchronizes a slot timing and a frame timing by using a primary synchronization signal (P-SS) and a secondary synchronization signal (S-SS) transmitted from the neighboring base station.

The P-SS and the S-SS are collectively referred to as a synchronization signal (SS). A synchronization code corresponding to a physical cell identifier (PCI) allocated to each cell on a one-to-one basis is allocated to the synchronization signal (SS). The number of PCIs is considered to be 1008. The communication terminal performs synchronization using the 1008 types of PCIs and detects (specifies) the PCI of the synchronized cell.

In step ST602, the communication terminal receives the PBCH for the next synchronized cell. A master information block (MIB) including cell configuration information is mapped to the BCCH on the PBCH. Therefore, the MIB is obtained by receiving the PBCH to obtain the BCCH. Examples of the information on the MIB include a system frame number (SFN), scheduling information of a system information block (SIB)1, a subcarrier spacing such as SIB1, and information on a DM-RS location.

In addition, the communication terminal acquires an SS block identifier from the PBCH. A part of bit sequences of the SS block identifier is included in the MIB. The remaining bit sequence is included in an identifier used for the sequence generation of the DM-RS associated with the PBCH. The communication terminal acquires the SS block identifier by using the MIB included in the PBCH and the sequence of the DM-RS associated with the PBCH.

Next, in step ST603, the communication terminal measures the received power of the SS block.

Next, in step ST604, the communication terminal selects a cell having the best reception quality, for example, a cell having the highest received power, that is, the best cell from among the one or more cells detected up to step ST603. In addition, the communication terminal selects a beam having the best reception quality, for example, a beam having the highest received power of the SS block, that is, a best beam. For the selection of the best beam, for example, the received power of the SS block for each SS block identifier is used.

Next, in step ST605, the communication terminal receives the DL-SCH based on the scheduling information of the SIB1 included in the MIB, to obtain the SIB1 in the broadcast information BCCH. The SIB1 includes information on access to the cell, cell configuration information, and scheduling information of other SIBs (SIBk: integer k ≥ 2). Further, the SIB1 includes a tracking area code (TAC).

Next, in step ST606, the communication terminal compares the TAC of the SIB1 received in step ST605 with a TAC portion of a tracking area identity (TAI) in the tracking area list already stored by the communication terminal. The tracking area list is also referred to as a TAI list. The TAI is identification information for identifying the tracking area, and is composed of a mobile country code (MCC), a mobile network code (MNC), and a tracking area code (TAC). The MCC is a country code. The MNC is a network code. The TAC is a code number of the tracking area.

When the TAC received in step ST605 is the same as the TAC included in the tracking area list as a result of the comparison in step ST606, the communication terminal enters the idle mode in the cell. In comparison, when the TAC received in step ST605 is not included in the tracking area list, the communication terminal requests a change of the tracking area in order to perform a tracking area update (TAU) to a core network (EPC) including the MME or the like through the cell.

A device (hereinafter, may be referred to as a "core network side device") constituting the core network updates the tracking area list based on an identification number (such as a UE-ID) of the communication terminal transmitted from the communication terminal together with a TAU request signal. The core network side device transmits the updated tracking area list to the communication terminal. The communication terminal rewrites (updates) the TAC list stored by the communication terminal based on the received tracking area list. Then, the communication terminal enters the idle mode in the cell.

Next, an example of a random access method in the communication system will be described. In the random access, 4-step random access and 2-step random access are used. In addition, for each of the 4-step random access and the 2-step random access, there are contention-based random access, that is, random access in which a timing contention with other user equipment may occur, and contention-free random access.

An example of the contention-based 4-step random access method will be described. As a first step, the user equipment transmits a random access preamble to the base station. The random access preamble may be selected from a predetermined range by the user equipment or may be individually allocated to the user equipment and notified from the base station.

In a second step, the base station transmits a random access response to the user equipment. The random access response includes uplink scheduling information used in a third step, the terminal identifier used in the uplink transmission of the third step, and the like.

In the third step, the user equipment performs the uplink transmission to the base station. The user equipment uses, for the uplink transmission, the information acquired in the second step. In a fourth step, the base station notifies the user equipment of whether or not the contention is solved. The user equipment, which has been notified that there is no contention, completes the random access procedure. The user equipment, which has been notified that there is the contention, starts the procedure from the first step again.

The contention-free 4-step random access method is different from the contention-based 4-step random access method in the following points. That is, before the first step, the base station allocates the random access preamble and the uplink scheduling to the user equipment in advance. In addition, the notification in the fourth step of whether or not the contention is solved is not necessary.

An example of the contention-based 2-step random access method will be described. As a first step, the user equipment performs the transmission of the random access preamble and the uplink transmission to the base station. In a second step, the base station notifies the user equipment of the presence or absence of the contention. The user equipment, which has been notified that there is no contention, completes the random access procedure. The user equipment, which has been notified that there is the contention, starts the procedure from the first step again.

The contention-free 2-step random access method is different from the contention-based 2-step random access method in the following points. That is, before the first step, the base station allocates the random access preamble and the uplink scheduling to the user equipment in advance. In addition, in the second step, the base station transmits a random access response to the user equipment.

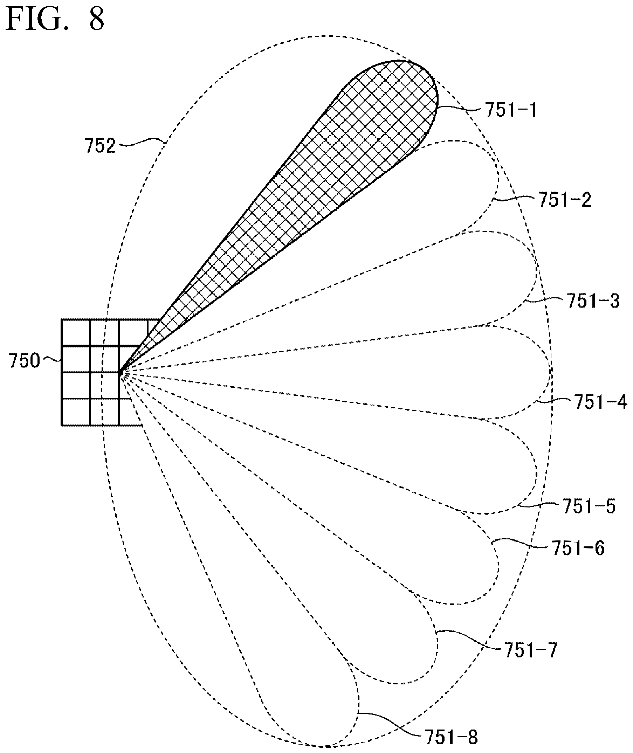

FIG. 8 shows an example of a cell configuration in NR. In the NR cell, a narrow beam is formed and transmitted by changing a direction. In the example shown in FIG. 8, a base station 750 performs transmission and reception with the user equipment by using a beam 751-1 at a certain time. At other times, the base station 750 performs transmission and reception with the user equipment by using a beam 751-2. Similarly, the base station 750 performs transmission and reception with the user equipment by using one or a plurality of beams 751-3 to 751-8. In this way, the base station 750 constitutes a wide-range cell 752.

FIG. 8 shows an example in which the number of beams used by the base station 750 is eight, but the number of beams may be different from eight. Further, in the example shown in FIG. 8, the number of beams used by the base station 750 at the same time is set to one, but may be plural.

A concept of quasi-colocation (QCL) is used for the identification of the beams (see Non Patent Document 14 (3GPP TS 38.214)). The beam is identified by information indicating which reference signal (for example, SS block or CSI-RS) beam the beam can be regarded as equivalent to. The information may include, for example, a type of criterion by which the beams can be regarded as equivalent to each other, such as information on Doppler shift, Doppler spread, mean delay, delay spread, or spatial Rx parameters (see Non Patent Document 14 (3GPP TS 38.214)).

In 3GPP, the sidelink (SL) is supported for device-to-device (D2D) communication and vehicle-to-vehicle (V2V) communication (see Non Patent Documents 1 and 16). The SL is defined by a PC5 interface.

In SL communication, in addition to broadcast, unicast and groupcast are supported, and thus support for the PC5-S signalling has been considered (see Non Patent Document 27 (3GPP TS 23.287)). For example, the PC5-S signalling is performed in order to establish the SL, that is, a link for performing PC5 communication. The link is performed in the V2X layer and is also referred to as a layer 2 link.

In addition, in the SL communication, the support of RRC signalling has been considered (see Non Patent Document 27 (3GPP TS 23.287)). The RRC signalling in the SL communication is also referred to as PC5 RRC signalling. For example, it has been proposed to notify the UE capability between the UEs that perform the PC5 communication, or to notify the configuration of the AS layer for performing the V2X communication using the PC5 communication.

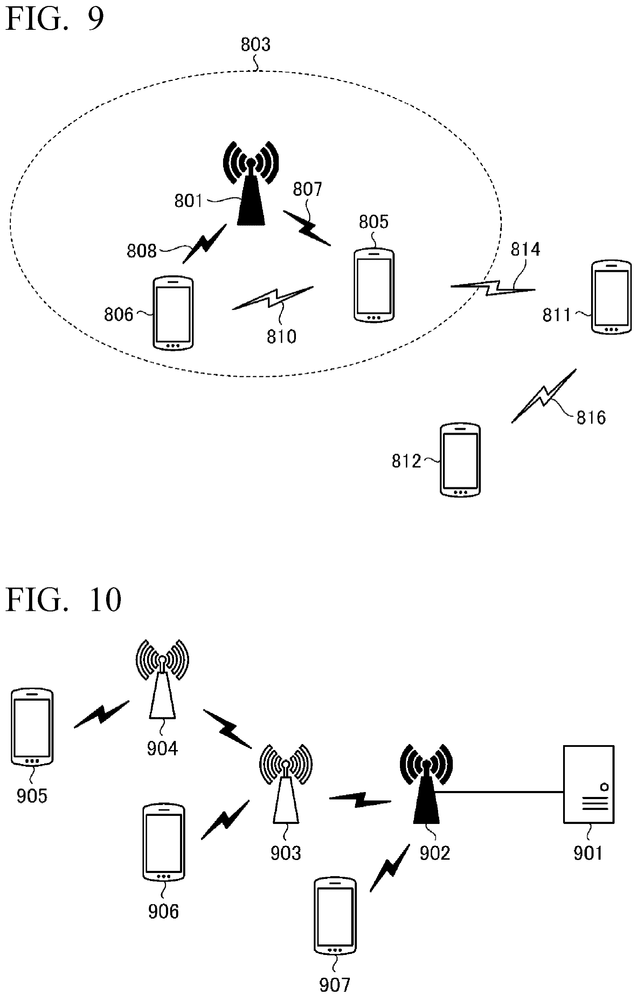

FIG. 9 shows an example of a connection configuration of the user equipment in the SL communication. In the example shown in FIG. 9, a UE 805 and a UE 806 are present within a coverage 803 of a base station 801. UL/DL communication 807 is performed between the base station 801 and the UE 805. UL/DL communication 808 is performed between the base station 801 and the UE 806. SL communication 810 is performed between the UE 805 and the UE 806. A UE 811 and a UE 812 are present outside the coverage 803. SL communication 814 is performed between the UE 805 and the UE 811. In addition, SL communication 816 is performed between the UE 811 and the UE 812.

In the SL communication, as an example of the communication between the UE and the NW via the relay, the UE 805 shown in FIG. 9 relays the communication between the UE 811 and the base station 801.

The same configuration as the configuration shown in FIG. 4 may be used for the UE that performs the relay. A procedure of the relay in the UE will be described with reference to FIG. 4. The procedure of the relay performed by the UE 805 in the communication from the UE 811 to the base station 801 will be described. A radio signal from the UE 811 is received by the antennas 307-1 to 307-4. The received signal is converted from the radio reception frequency into the baseband signal by the frequency conversion unit 306, and is subjected to the demodulation processing in the demodulation unit 308. The weight calculation and the multiplication processing may be performed in the demodulation unit 308. The demodulated data is passed to the decoder unit 309 and is subjected to the decoding processing such as forward error correction. The decoded data is passed to the protocol processing unit 301 and is subjected to the protocol processing such as MAC and RLC used for the communication with the UE 811, for example, removal of the header in each protocol. Further, the protocol processing of RLC, MAC, and the like used for the communication with the base station 801, for example, an operation such as adding the header in each protocol is performed. In the protocol processing unit 301 of the UE 811, the protocol processing of PDCP and SDAP may be performed. The data on which the protocol processing has been performed is passed to the encoder unit 304 and subjected to the encoding processing such as forward error correction. Data that is directly output from the protocol processing unit 301 to the modulation unit 305 without being subjected to the encoding processing may be present. The modulation processing is performed on the data on which the encoding processing has been performed by the encoder unit 304 in the modulation unit 305. The modulation unit 305 may perform the precoding in MIMO. The modulated data is converted into the baseband signal, and then output to the frequency conversion unit 306 to be converted into the radio transmission frequency. Thereafter, transmission signals are transmitted from antennas 307-1 to 307-4 to the base station 801.

In the above description, the example of the relay performed by the UE 805 in the communication from the UE 811 to the base station 801 has been described, but the same procedure is also used in the relay of the communication from the base station 801 to the UE 811.

The 5G base station can support integrated access and backhaul (IAB) (see Non Patent Documents 2 and 20). A base station that supports IAB (hereinafter, may be referred to as an IAB base station) is composed of an IAB donor CU that is a CU of a base station that operates as an IAB donor that provides an IAB function, an IAB donor DU that is a DU of a base station that operates as an IAB donor, and an IAB node that is connected to the IAB donor DU and the UE using a radio interface. The F1 interface is provided between the IAB node and the IAB donor CU (see Non Patent Document 2).

FIG. 10 shows an example of the connection of the IAB base station. An IAB donor CU 901 is connected to an IAB donor DU 902. An IAB node 903 is connected to the IAB donor DU 902 using the radio interface. The IAB node 903 is connected to an IAB node 904 using the radio interface. That is, the IAB nodes may be connected in multiple stages. A UE 905 is connected to the IAB node 904 using the radio interface. A UE 906 may be connected to the IAB node 903 using the radio interface, and a UE 907 may be connected to the IAB donor DU 902 using the radio interface. A plurality of IAB donor DUs 902 may be connected to the IAB donor CU 901, a plurality of IAB nodes 903 may be connected to the IAB donor DU 902, and a plurality of IAB nodes 904 may be connected to the IAB node 903.

A backhaul adaptation protocol (BAP) layer is provided in the connection between the IAB donor DU and the IAB node and the connection between the IAB nodes (see Non Patent Document 29). The BAP layer performs operations such as routing of received data to the IAB donor DU and/or the IAB node, and mapping received data to the RLC channel (see Non Patent Document 29).

As an example of the configuration of the IAB donor CU, the same configuration as that of the CU 215 is used.

As an example of the configuration of the IAB donor DU, the same configuration as that of the DU 216 is used. In the protocol processing unit of the IAB donor DU, processing of the BAP layer, for example, processing of adding a BAP header in downlink data, routing to the IAB node, removing the BAP header in uplink data, or the like is performed.

As an example of the configuration of the IAB node, a configuration excluding the EPC communication unit 401, the other-base station communication unit 402, and the 5GC communication unit 412 shown in FIG. 5 may be used.

A transmission/reception procedure in the IAB node will be described with reference to FIGS. 5 and 10. The transmission/reception procedure of the IAB node 903 in the communication between the IAB donor CU 901 and the UE 905 will be described. In the uplink communication from the UE 905 to the IAB donor CU 901, the radio signal from the IAB node 904 is received by the antenna 408 (some or all of the antennas 408-1 to 408-4). The received signal is converted from the radio reception frequency into the baseband signal by the frequency conversion unit 407, and is subjected to the demodulation processing in the demodulation unit 409. The demodulated data is passed to the decoder unit 410 and is subjected to the decoding processing such as forward error correction. The decoded data is passed to the protocol processing unit 403 and is subjected to the protocol processing such as MAC and RLC used for the communication with the IAB node 904, for example, removal of the header in each protocol. In addition, routing to the IAB donor DU 902 using the BAP header is performed, and the protocol processing such as RLC and MAC used for the communication with the IAB donor DU 902, for example, an operation such as adding the header in each protocol is performed. The data on which the protocol processing has been performed is passed to the encoder unit 405 and subjected to encoding processing such as forward error correction. Data that is directly output from the protocol processing unit 403 to the modulation unit 406 without being subjected to the encoding processing may be present. The encoded data is subjected to modulation processing by the modulation unit 406. The modulation unit 406 may perform the precoding in MIMO. The modulated data is converted into the baseband signal, and then output to the frequency conversion unit 407 to be converted into the radio transmission frequency. Thereafter, the transmission signals are transmitted from the antennas 408-1 to 408-4 to the IAB donor DU 902. The same procedure is also performed in the downlink communication from the IAB donor CU 901 to the UE 905.

In the IAB node 904, the same transmission/reception procedure as that of the IAB node 903 is also performed. In the protocol processing unit 403 of the IAB node 903, for example, processing of adding the BAP header and routing to the IAB node 904 in the uplink communication, and processing of removing the BAP header in the downlink communication are performed as the processing of the BAP layer.

In 3GPP, it has been discussed to incorporate an ultra-low power IoT device (hereinafter, may be referred to as a device) into the mobile communication system. It has been proposed that the ultra-low power IoT device performs the communication with the UE or the gNB using a communication method different from the communication method used in an air interface defined in 3GPP in the related art (see Non Patent Documents 31, 33, and 34). Therefore, a method of allowing coexistence of communication on an air interface (Uu) between the UE and the gNB and communication on an air interface between the device and the UE or the gNB is required. In addition, not only the air interface (Uu) between the UE and the gNB but also an air interface (PC5) between the UE and the UE are defined as the interface defined in 3GPP. Therefore, a method of allowing coexistence of communication on the air interface (PC5) between the UE and the UE and communication on the air interface between the device and the UE or the gNB is also required.

It is conceivable that a radio wave environment between the device and the UE changes due to a reason such as the movement of the device or the UE. As a result, it is conceivable that the UE that can be connected to the device changes. However, a procedure of switching the UE connected to the device is not disclosed. Therefore, there is an issue that the connection with the UE is disconnected due to the movement of the device, and then the communication between the device and the communication system cannot be executed.

In the present embodiment, a method of solving such an issue is disclosed.

In order to solve the above-described issue, in the present embodiment, the base station determines whether or not to switch the UE connected to the device. The base station may use, for the determination, information on the power received by the UE from the device.

The UE may perform a search for the device. The UE may transmit a signal for searching to the device. The search for the device performed by the UE may be performed in response to an instruction from the base station or may be performed periodically. The period may be determined in advance by a standard or may be determined by the base station, and may be broadcast or notified to the UE. For the broadcast or the notification from the base station to the UE, RRC signalling may be used, MAC signalling may be used, or L1/L2 signalling may be used.

The device may send a response to the UE in response to the signal transmitted from the UE. The response may include information on the device itself, for example, identification information of the device itself.

As another example, the device may not send a response to the signal transmitted from a connection destination UE. As a result, for example, it is possible to reduce interference with another device, UE, base station, or the like.

As another example, the device may autonomously transmit the signal. The signal may include information on the device itself, for example, identification information of the device itself, or may include data possessed by the device itself.

The UE may measure the signal transmitted by the device. The signal may be, for example, a signal used for a response to a search signal, a signal used for signalling transmission from the device, or a signal used for data transmission from the device. The UE may measure power received from the device, may measure a received signal-to-interference-plus-noise-ratio (SINR), may measure a reception error rate, or may measure a reception delay.

The UE that transmits the radio waves and the UE that receives the signal from the device that performs transmission using the radio waves may be different from each other. The UE may transmit the radio waves to the device. Another UE may measure the signal transmitted by the device. The other UE may notify the base station of a measurement result of the signal. For the notification of the measurement result, RRC signalling may be used, MAC signalling may be used, or L1/L2 signalling may be used. The transmission of the radio waves from the UE to the device and/or the measurement performed by the other UE may be performed in response to an instruction from the base station or may be performed periodically. The period may be determined in advance by a standard or may be determined by the base station, and may be broadcast or notified to the UE. For the notification, RRC signalling may be used, MAC signalling may be used, or L1/L2 signalling may be used. The base station may instruct the UE to transmit the radio waves or may instruct the UE to measure the signal from a device. As a result, for example, the resource related to the transmission of the UE can be reduced, and thus the resource efficiency of the communication system can be improved accordingly. For the instruction, RRC signalling may be used, MAC signalling may be used, or L1/L2 signalling may be used. The UE that has transmitted the radio waves may also measure the signal from the device. The UE may notify the base station of the measurement result. As a result, for example, the UE that transmits the radio waves and the other UE can measure the signal from the same device, and as a result, the base station can promptly determine whether or not to switch the device-connection destination UE.

The UE notifies the base station of information on the measurement result of the signal from the device. There may be a plurality of UEs that perform the notification of the information. The notification of the information may be performed, for example, in response to an instruction from the base station. For the notification, for example, RRC signalling may be used, MAC signalling may be used, L1/L2 signalling may be used, or the above-described combination may be used.

As examples of the information notified from the UE to the base station, (1) to (11) described below are disclosed.

(1) Information used for identifying device.
(2) Information on power measurement result.
(3) Information on reception error rate.
(4) Information on time when power is measured.
(5) Information on location of UE.
(6) Information on location of device.
(7) Information used for identifying area.
(8) Information on time when location is measured.
(9) Information on resource used for communication with device.
(10) Information on reception delay.
(11) Combination of (1) to (10) described above.

The information of (1) described above may be, for example, an identifier of the device. By including the information of (1) described above, for example, the base station can promptly detect the device related to the switching of the UE.

As examples of the information of (2) described above, (2-1) to (2-6) described below are disclosed.

(2-1) Information on power received by UE from device.
(2-2) Information on path loss between UE and device.
(2-3) Information on power transmitted to device by UE.
(2-4) Information on ratio between power transmitted from UE to device and power received by UE from device.
(2-5) Information on SINR.
(2-6) Combination of (2-1) to (2-5) described above.

The information of (2-1) described above may be provided as a value obtained by quantizing the received power. The unit and/or reference value (offset) of the quantization may be determined by, for example, a standard. As a result, for example, the base station can ascertain the received power in the UE.

As another example of the information of (2-1) described above, the information may be provided as information indicating whether the received power is less than or equal to or less than a predetermined threshold value or less than the threshold value. The threshold value may be provided by a standard or may be determined by the base station, and may be broadcast or notified to the UE. As a result, for example, the amount of signalling from the UE to the base station can be reduced.

The information of (2-2) described above may be provided in the same manner as the information of (2-1) described above. For example, the information may be provided as a value obtained by quantizing the path loss, or may be provided as information indicating whether the quantized value is equal to or greater than a predetermined threshold value or greater than the threshold value. The unit and/or reference value (offset) of the quantization described above and the predetermined threshold value described above may also be provided in the same manner as the information of (2-1). As a result, for example, the base station can flexibly determine whether or not to switch the UE.

The UE may derive the path loss of (2-2) described above. For example, the UE may acquire, from the device, the information on the received power in the device. As another example, the path loss may be derived by the device. The UE may transmit the information on the transmit power to the device. The device may measure the power received from the UE. The device may notify the UE of the derived path loss. As a result, for example, the accuracy of deriving the path loss between the UE and the device can be improved.

The information of (2-3) described above may be provided in the same manner as the information of (2-1) described above. For example, the information may be provided as a value obtained by quantizing the transmit power, or may be provided as information indicating whether the quantized value is equal to or greater than a predetermined threshold value or greater than the threshold value. The unit and/or reference value (offset) of the quantization described above and the predetermined threshold value described above may also be provided in the same manner as the information of (2-1). By using the information of (2-3) described above, for example, an increase in transmit power of the UE can be prevented, and as a result, interference with the communication system can be reduced. In addition, it is possible to reduce the processing amount related to the received power measurement in the UE, and feedback from the device to the UE is not necessary, and as a result, it is possible to reduce the amount of signalling between the device and the UE.

The information of (2-4) described above may be derived by the UE itself. For example, the UE may perform the derivation using the power transmitted to the device and the power received from the device. As a result, for example, feedback from the device to the UE is not necessary, and as a result, the amount of signalling between the device and the UE can be reduced.

With the notification of the information of (2-5) described above, for example, the base station can determine whether or not to switch the UE even in an environment with a large interference, and as a result, the robustness of the communication between the device and the communication system can be improved.

With the notification of the information of (3) described above, for example, the base station can determine whether or not to switch the UE even in an environment in which a large number of reception errors occur (for example, an environment in which interference is large), and as a result, the reliability of the communication between the device and the communication system can be improved.

With the notification of the information of (4) described above, for example, the base station can avoid a situation in which, although the UE switching is determined using the past measurement result, a communication environment between the switching target UE and the device deteriorates at the time of the switching, and as a result, the connection between the device and the communication network cannot be established.

The base station may use the information of (5) described above to, for example, determine the UE present in the vicinity of the UE to which the device is currently connected as a candidate for the switching target UE. With the notification of the information of (5) described above, for example, the base station can promptly determine the switching target UE or the UE that is the candidate for the switching target.

The base station may use the information of (6) described above to, for example, determine the UE present in the vicinity of the device as the candidate for the switching target UE. With the notification of the information of (6) described above, for example, the base station can promptly determine the switching target UE or the UE that is the candidate for the switching target.

The information of (7) described above may be information on an area to which the UE and/or the device belongs. The information on the area may be, for example, information in which location information is classified by a predetermined method. The information may include, for example, information on an area indicating whether or not the use of predetermined radio waves is regulated. The base station may use the information of (7) described above to, for example, determine the UE present in the same area as the candidate for the switching target UE. With the notification of the information of (7) described above, for example, the base station can promptly determine the UE that is suitable for the regulation.

With the notification of the information of (8) described above, for example, the base station can avoid a situation in which, although the UE switching is determined using the past location measurement result, a distance between the switching target UE and the device is separated at the time of the switching, and as a result, the connection between the device and the communication network cannot be established.

The information of (9) described above may be, for example, information on a frequency. The base station may select a UE that can communicate with the device by using the information, and use the selected UE as the switching target UE. As a result, for example, the connection between the device and the communication network can be maintained.

The information of (10) described above may be, for example, a difference in time from the transmission of the signal from the UE to the device to the reception of the signal from the device, or a difference in time from the transmission of the signal by the UE to the reception of the signal by the UE after the radio waves used for the transmission of the signal from the device to the UE are transmitted. The base station may derive the distance between the UE and the device by using the information. As a result, for example, the base station can ascertain the distance between the UE and the device.

The UE may store the information of (1) to (11) described above. The UE may store the information as, for example, device history information. The UE may perform the transmission and reception with the device using the information. For example, the UE may control the transmit power used for the communication with the device by using the information of (2) and (5) described above. As a result, for example, it is possible to execute efficient communication between the UE and the device.

The base station may store the information of (1) to (11) described above. The base station may store the information as, for example, the device history information, or may store the information as UE history information. For example, the base station may store the information as the UE history information for each device, or may store the information as the device history information for each UE. The base station may determine the device-connection destination UE, or may perform scheduling of the UE using the information. As a result, for example, it is possible to prevent re-switching of the connection destination UEs from being performed immediately after the switching of the device-connection destination UEs, and as a result, it is possible to reduce the amount of signalling in the communication system.

As another example of the notification from the UE to the base station, the UE may request the base station to switch the device-connection destination UEs. The request may include the information of (1) to (11) described above. For the request, for example, RRC signalling may be used, MAC signalling may be used, L1/L2 signalling may be used, or the above-described combination may be used. The base station may start procedure related to the switching of the connection destination UEs by using the information.

The base station may instruct the UE to search for the device. The base station may perform the instruction with respect to a plurality of UEs. The UE to which the instruction is issued may or may not include the device-connection destination UE. The base station may perform the instruction in response to the notification described above, or may perform the instruction in advance to another UE. For the instruction, for example, RRC signalling may be used, MAC signalling may be used, L1/L2 signalling may be used, or the above-described combination may be used. The other UE may search for the device or may measure the power received from the device, in response to the instruction from the base station.

As the information included in the instruction to the other UE from the base station, (A) to (D) described below are disclosed.

(A) Information used for identifying device.
(B) Information on resource used for communication with device.
(C) Information on transmit power.
(D) Combination of (A) to (C) described above.

The information of (A) described above may include, for example, the identifier of the device. As a result, for example, the UE that has received the instruction from the base station can promptly detect the device to be searched for.

The information of (A) described above may not be included in the instruction from the base station. As a result, for example, the UE that has received the instruction from the base station can widely search for a device without being limited to the device.

The information of (B) described above may include information on the resource supported by the device. The resource may include, for example, a frequency. The resource may be, for example, a resource supported by the device related to the connection destination UE switching. As a result, for example, the UE that has received the instruction from the base station can promptly detect the resource (for example, the frequency) that can be used by the device that is the search target.

The information of (C) described above may include information on the transmit power used for searching for the device. The UE that has received the instruction from the base station may search for the device using the information. As a result, for example, it is possible to prevent interference due to transmission with excessive power from the UE.

The other UE may notify the base station of a device search result. The notification may include information on the device, for example, information on the presence or absence of the device, or may include the information of (1) to (11) described above.

The base station determines the switching target UE. The base station may perform the determination using information from the other UE.

The base station may request the switching source UE to provide the notification of the device context. The request may include information on the device for UE switching, for example, information for identifying the device. The request may be issued by using RRC signalling, for example, RRC reconfiguration, may be issued by using MAC signalling, or may be issued by using L1/L2 signalling.

The switching source UE may notify the base station of the device context. The notification issued from the switching source UE to the base station may be performed in response to the request from the base station to the switching target UE. The notification may be issued by using RRC signalling, for example, RRC reconfiguration completion, may be issued by using MAC signalling, or may be issued by using L1/L2 signalling.

The device context may include information for identifying the device, may include data related to the device, for example, data notified from the device, may include information on time, may include information on a location of the device, may include information on the UE, and may include information on a location of the UE. The information on the time may include information on time when data is acquired from the device. The information on the location of the device and/or the information on the location of the UE may include, for example, information on the location when data is acquired from the device. The device context may include information on a configuration of the communication between the UE and the base station, may include information on the resource (for example, time, frequency, power, or beam) used for the communication between the UE and the base station, or may include information on scheduling between the UE and the device. The device context may include information on a configuration of the communication between the UE and the core NW device. The device context may include information on a configuration of the communication between the device and the base station, or may include information on a configuration of the communication between the device and the core NW device. The core NW device may be the AMF or the UPF. A new entity related to the communication with the device may be provided. The core NW device may be the entity.

The base station may not request the switching source UE to notify the device context. The switching source UE may not notify the base station of the device context. For example, the base station may store the device context. As a result, for example, it is possible to reduce signalling between the base station and the UE.

The base station notifies the switching target UE of the switching of the device-connection destination. For the notification, for example, RRC signalling may be used, MAC signalling may be used, or L1/L2 signalling may be used. The switching target UE may send a response to the notification to the base station. For the response, for example, RRC signalling may be used, MAC signalling may be used, or L1/L2 signalling may be used.

As examples of the information included in the notification, (a) to (f) described below are disclosed.

(a) Information for identifying device related to switching.
(b) Information on switching source UE.
(c) Information on configuration used for communication with device by switching target UE.
(d) Information on resource (for example, frequency or time) used for communication with device.
(e) Device context.
(f) Combination of (a) to (e) described above.

The information of (a) described above may be, for example, the identifier of the device. By including the information of (a) described above, for example, the UE can promptly recognize the device related to the switching.

The information of (b) described above may be, for example, an identifier of the switching source UE. By including the information of (b) described above, for example, the switching target UE can promptly recognize the switching source UE.

By including the information of (c) described above, for example, the switching target UE can promptly start configuring the communication with the device.

By including the information of (d) described above, for example, the switching target UE can promptly detect the resource (for example, the frequency and the time) used for the communication with the device, and as a result, the switching target UE can promptly start the communication with the device.

By including the information of (e) described above, for example, the switching target UE can promptly start the communication with the device.

The base station may instruct the switching source UE to release the device context. As another example, the base station may instruct the switching source UE to stop the transmission and reception with the device. The instruction may include the information for identifying the device. The switching source UE may release the device context or may not perform the transmission and reception with the device, by using the instructions.

The switching source UE may transmit the data related to the device to the base station. The transmission may be performed, for example, in response to an instruction from the base station to the switching source UE. The information may be, for example, data that has not been transmitted from the switching source UE to the base station, data for which transmission confirmation has not been completed, or information on data that has not been transmitted or for which transmission confirmation has not been completed from the switching source UE to the device. As a result, for example, it is possible to prevent omission or duplication of data in the communication between the device and the communication system.

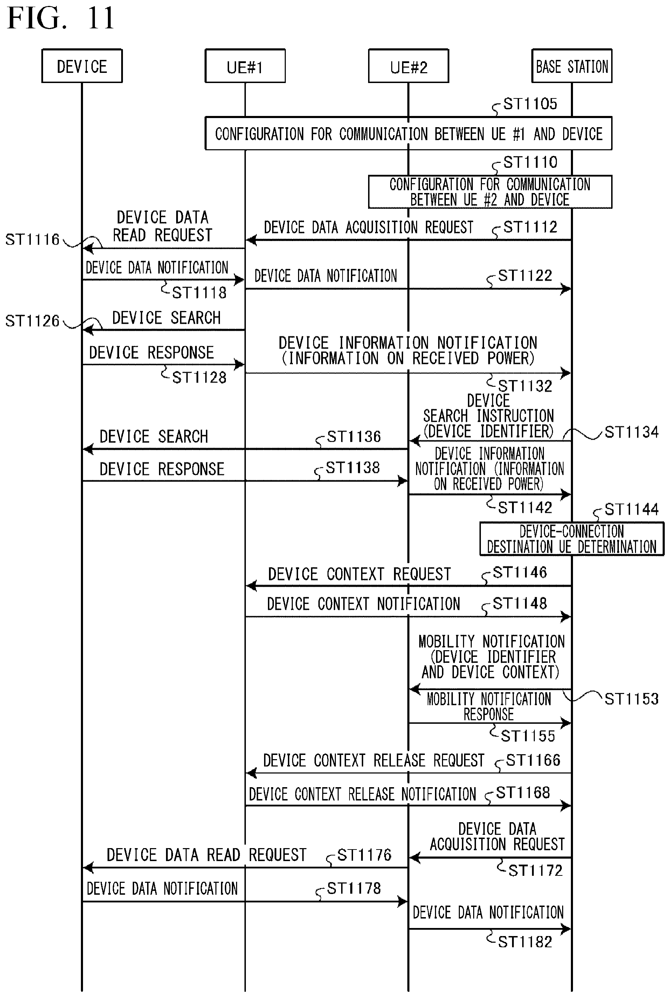

FIG. 11 is a sequence diagram showing an example of an operation of switching the device-connection destination UE, which is related to the communication between the UE and the device. In the example shown in FIG. 11, a case is shown in which the device-connection destination UE is switched from the UE #1 to the UE #2. In the example shown in FIG. 11, a case is shown in which the base station determines whether or not to switch the device-connection destination UE.

In step ST1105 shown in FIG. 11, the configuration for the communication between the UE #1 and the device is performed between the base station and the UE #1. In step ST1110, the configuration for the communication between the UE #2 and the device is performed between the base station and the UE #2.

In step ST1112 shown in FIG. 11, the base station requests the UE #1 to acquire the data possessed by the device. For the request, RRC signalling may be used, MAC signalling may be used, or L1/L2 signalling may be used. In step ST1116, the UE #1 requests the device to read the data of the device. In step ST1118, the device notifies the UE #1 of the read data. In step ST1122, the UE #1 notifies the base station of the data read by the device. For the notification, RRC signalling may be used, MAC signalling may be used, or L1/L2 signalling may be used.

In step ST1126 shown in FIG. 11, the UE #1 performs the search for the device. The search may be performed in response to a device search request from the base station. In step ST1128, the device transmits a response to the UE #1. The response may include information on the identifier of the device itself. At the time of the transmission of step ST1128 from the device to the UE #1, the device may transmit radio waves to the UE #1. The device may perform the transmission in step ST1128 by using the radio waves from the UE. In step ST1128, the UE #1 acquires the information on the device.

In step ST1132 shown in FIG. 11, the UE #1 notifies the base station of the information on the searched device. The notification may include the information of (1) to (11) described above. For step ST1132, RRC signalling may be used, MAC signalling may be used, or L1/L2 signalling may be used.

In step ST1134 shown in FIG. 11, the base station instructs the UE #2 to search for the device. The base station may issue the instruction to another UE. Step ST1134 may include, for example, the information of (A) to (D) described above.

In step ST1136 and step ST1138 shown in FIG. 11, the same procedures as those in step ST1126 and step ST1128 are performed between the device and the UE #2. In step ST1142, the UE #2 performs the same notification as that in step ST1132 to the base station.

In step ST1144 shown in FIG. 11, the base station determines to switch the UE connected to the device from the UE #1 to the UE #2. The base station may perform the determination based on one or both of the information included in the notification of step ST1132 and the information included in the notification of step ST1142. In step ST1146, the base station requests the UE #1 to notify the device context. The request may include the identifier of the device. The signalling of step ST1146 may be performed by using RRC signalling, for example, RRC reconfiguration, may be performed by using MAC signalling, or may be performed by using L1/L2 signalling. In step ST1148, the UE #1 notifies the base station of the device context. The device context may include the information for identifying the device, may include the data related to the device, for example, the data notified from the device, may include the information on the time, may include information on the location of the device, and may include information on a location of the UE #1. The information on the time may include information on the time when data is acquired from the device. The information on the location of the device and/or the information on the location of the UE #1 may include, for example, information on the location when data is acquired from the device. The notification may be issued by using RRC signalling, for example, RRC reconfiguration completion, may be issued by using MAC signalling, or may be issued by using L1/L2 signalling.

In step ST1153 shown in FIG. 11, the base station notifies the UE #2 of the switching of the device-connection destination UE. The notification may include the information for identifying the device, or may include the device context. The notification may be issued by using RRC signalling, for example, RRC reconfiguration, may be issued by using MAC signalling, or may be issued by using L1/L2 signalling. The UE #2 may perform the configuration related to the communication with the device by using the information included in the notification of step ST1153. In step ST1155, the UE #2 sends a response to step ST1153 to the base station. The response may be sent by using RRC signalling, for example, RRC reconfiguration completion, may be sent by using MAC signalling, or may be sent by using L1/L2 signalling.

In step ST1166 shown in FIG. 11, the base station requests the UE #1 to release the device context. The request may include the identifier of the device. The UE #1 releases the device context related to the device in response to the request. In step ST1168, the UE #1 notifies the base station that the device context release is completed.

In step ST1172 to step ST1182 shown in FIG. 11, the same procedures as those in step ST1112 to step ST1122 are performed between the base station and the UE #2 and between the UE #2 and the device.

The notification of the information on the power received from the device to the base station from the UE may be performed in response to an instruction from the base station, may be performed periodically, or may be performed in response to the satisfaction of a predetermined condition (event). The base station may notify the UE of information on the predetermined condition. The information may be included in the communication configuration between the UE and the device (for example, step ST1105 shown in FIG. 11).

Examples of the predetermined condition include (I) to (X) described below.

(I) Power received from device is less than or equal to or less than predetermined threshold value.
(II) Path loss between device and UE is greater than or equal to or greater than predetermined threshold value.
(III) Power used for transmission to device is greater than or equal to or greater than predetermined threshold value.
(IV) SINR of signal received from device is less than or equal to or less than threshold value.
(V) Reception error rate of signal received from device is greater than or equal to or greater than threshold value.
(VI) Ratio (transmit power/received power) of power transmitted to device to power received from device is greater than or equal to or greater than threshold value.
(VII) Ratio (received power/transmit power) of power received from device to power transmitted to device is equal to or less than threshold value.
(VIII) Received power of signal, which is transmitted by device using radio waves from other UE and/or base station as power source, in UE is greater than or equal to or greater than received power of signal, which is transmitted by device using radio waves from UE itself as power source, in UE self.
(IX) Distance between UE and device is greater than or equal to or greater than threshold value.
(X) Combination of (I) to (IX) described above.

As described above in (I), the base station can promptly detect a drop in power received from the device at the UE, and as a result, it is possible to continue the communication between the device and the communication network.

As described above in (II), the base station can promptly detect an increase in path loss from the device at the UE, and as a result, it is possible to continue the communication between the device and the communication network and to reduce interference with the other UE or the like by preventing an excessive rise in transmit power of the UE.

As described above in (III), the base station can prevent an excessive rise in transmit power of the UE, and as a result, it is possible to reduce interference with the other UE and the like.

As described above in (IV), the base station can promptly detect an increase in interference around the UE, and as a result, it is possible to continue the communication between the device and the communication network.

As described above in (V), the base station can set the condition without depending on reception performance and/or demodulation performance of the UE, and as a result, it is possible to avoid the complexity related to setting of the condition.

For (VI) described above, the UE may determine whether or not the predetermined condition is satisfied, by using the information measured by the UE itself. As a result, for example, feedback from the device to the UE is not necessary, and as a result, the amount of signalling between the device and the UE can be reduced.

By using (VII) described above, it is possible to suppress the value of the ratio to be calculated by the UE to be small, and as a result, it is possible to prevent overflow in calculation, and as a result, it is possible to prevent the malfunction in the UE.

As described above in (VIII), the base station can detect the presence of the UE or the base station more suitable than the UE as the device-connection destination, and as a result, the communication quality between the device and the communication network can be secured.

As described above in (IX), the base station can promptly ascertain that the distance between the UE and the device is large and the UE is inappropriate for communication, and as a result, it is possible to continue the communication between the device and the communication network.

The offset may be provided in the threshold value related to the above-described condition. For example, the UE may determine whether or not the condition is satisfied based on a value obtained by adding the offset to the threshold value, may determine whether or not the condition is satisfied based on a value obtained by subtracting the offset from the threshold value, may compare a value obtained by adding the offset to the result measured or derived by the UE itself with the threshold value, or may compare a value obtained by subtracting the offset from the result measured or derived by the UE itself with the threshold value. As a result, for example, the base station can flexibly set the condition.

A plurality of the above-described offsets may be provided. For example, the UE may compare a value obtained by adding a first offset to the result measured or derived by the UE itself with a value obtained by subtracting a second offset from the threshold value, may compare a value obtained by subtracting the first offset from the result measured or derived by the UE itself with a value obtained by adding the second offset to the threshold value, may compare the value obtained by adding the first offset to the result measured or derived by the UE itself with the value obtained by adding the second offset to the threshold value, or may compare the value obtained by subtracting the first offset from the result measured or derived by the UE itself with the value obtained by subtracting the second offset from the threshold value. As a result, for example, the base station can more flexibly set the condition.

The value of one or a plurality of offsets described above may be determined by a standard or may be determined by the base station, and may be broadcast or notified to the UE. For example, the base station may include the information on the offset in the information on the condition and notify of the information. As a result, for example, the number of pieces of signalling between the base station and the UE can be reduced. As another example, the base station may notify of the information on the offset by using signalling different from the notification of the information on the condition. As a result, for example, the base station can flexibly set the condition.

The base station may notify the UE of the information on the offset by using RRC signalling. As a result, for example, the base station can notify the UE of a lot of information. As another example, the base station may notify of the information by using MAC signalling. As a result, for example, the base station can promptly notify the UE of the information. As another example, the base station may notify of the information by using L1/L2 signalling. As a result, for example, the base station can more promptly notify the UE of the information.

The device may transmit data to the UE. The transmission may be performed singly or continuously. The transmission may be performed in response to an instruction from the UE, or may be performed autonomously by the device. The instruction from the UE may be sent in response to an instruction from the base station.

The UE may instruct the device to start the data transmission. The device may start the data transmission to the UE in response to the instruction.

The UE may instruct the device to stop the data transmission. The device may stop the data transmission to the UE in response to the instruction.

The UE may transmit data to the device. The transmission may be performed singly or continuously. The transmission may be performed in response to an instruction from the base station, or may be performed autonomously by the UE.

The UE may notify the device of the start of the data transmission. The device may start the reception of the data from the UE in response to the instruction.

The UE may notify the device of the stop of the data transmission. The device may stop the reception of the data from the UE in response to the instruction.

The stop of the data transmission by the device may be performed in response to data depletion in the device, may be performed in response to reception of the search signal from the UE, or may be performed in response to signalling from the UE.

The stop of the data reception by the device may be performed in response to reception of the search signal from the UE or may be performed in response to signalling from the UE.

The UE may instruct the device to stop the data transmission or may notify of the stop of the data transmission from the UE itself, in response to the satisfaction of the event described above, for example, (I) to (X) described above. It is possible to stop the transmission and reception of data before the radio wave environment between the device and the UE deteriorates, and as a result, it is possible to improve the resource usage efficiency of the communication system.

As another example, the UE may instruct the device to stop the data transmission or may notify of the stop of the data transmission from the UE itself, in response to the request for the device context notification from the base station. As a result, for example, it is possible to stop the transmission and reception of data before the radio wave environment between the device and the UE deteriorates, and as a result, it is possible to improve the resource usage efficiency of the communication system.

As another example, the UE may instruct the device to stop the data transmission or may notify of the stop of the data transmission from the UE itself, in response to the request for the device context release from the base station. As a result, for example, a data transmission/reception stop time between the device and the UE can be reduced, and as a result, a data communication amount between the device and the UE can be increased.

A state related to the connection between the device and the UE may be provided. The state may be provided, for example, in single communication between the device and the UE. For example, the connection between the device and the UE may be established at a timing when the communication between the device and the UE is scheduled, or the connection between the device and the UE may be released outside of the timing. As another example, the state may be provided in continuous communication between the device and the UE. For example, the connection between the device and the UE may be performed in response to the start of the data transmission, the connection between the device and the UE may be performed in response to the instruction to start the data transmission, the connection between the device and the UE may be released in response to the stop of the data transmission, or the connection between the device and the UE may be released in response to the instruction to stop the data transmission. As a result, for example, in the communication system, the complexity related to the control of the device can be avoided.

Connection destination of a plurality of device may be collectively switched. For example, the request for the device context from the base station to the UE, the notification of the device context from the UE to the base station, the notification of the device-connection destination UE switching from a plurality of base stations to the UE, and the request for the device context release from the base station to the UE may include information on the plurality of devices. For example, the information on the plurality of devices may be included in step ST1146 shown in FIG. 11. The same may apply to step ST1148, step ST1153, and step ST1166 as well. As a result, for example, the amount of signalling between the base station and the UE can be reduced.

The instruction to search the device with respect to the UE from the base station may be issued when the UE is connected to the base station. The instruction may be issued to, for example, the UE that can communicate with the device. The instruction may be included in signalling of starting the connection from the base station to the UE. For example, the instruction may be included in Msg2 and/or Msg4 in the 4-step random access procedure, may be included in MsgB in the 2-step random access procedure, may be included in signalling of the RRC setup, may be included in signalling of the RRC resume, or may be included in signalling of the RRC reconfiguration. As another example, the instruction may be included in the information on scheduling from the base station to the UE. As a result, for example, the base station can instruct the UEs that are camped in its coverage to broadly perform the search for the device, and the base station can detect the UE capable of communicating with the device in advance, and as a result, the procedure of switching the UE can be promptly executed.

The base station may instruct the UE to stop the search for the device. The UE may not perform the search for the device in response to the instruction. The stop instruction may be included in RRC signalling. The RRC signalling may be, for example, RRC reconfiguration signalling, RRC suspend signalling, or RRC release signalling. As another example, the stop instruction may be included in the information on scheduling from the base station to the UE. As a result, for example, it is possible to prevent the search for the device from being unnecessarily executed, and as a result, it is possible to improve the frequency/time resource use efficiency of the communication system.

Information on a timer may be provided in the search for the device, or information on an expiration date may be provided. The information may be included in the instruction to the UE from the base station. The UE may activate the timer in response to the reception of the instruction. The UE may stop the timer in response to the completion of the search for the device. The UE may stop the search for the device in response to the expiration of the timer, or may notify the base station of the device search result. As another example, the UE may stop the search for the device in response to the arrival of the expiration date, or may notify the base station of the device search result. As a result, for example, the base station does not necessary to issue the stop instruction to the UE, and as a result, the amount of signalling between the base station and the UE can be reduced.

According to Embodiment 1, even in a case where the device moves, the communication between the device and the communication system can be continued.

### Embodiment 2.

As the device moves, the UE suitable for the communication with the device may be a UE belonging to a different base station. In this case, there is an issue that the method disclosed in Embodiment 1 cannot be applied.

In Embodiment 2, a method of solving the above-described issue will be disclosed.

In the present embodiment, a base station (hereinafter, may be referred to as a switching source base station) to which the switching source UE is connected determines whether or not to switch the UE and/or the base station. In this way, it is possible to continue communication by switching the connection destination to the UE belonging to the base station different from the switching source base station in a case where the device moves.

The switching source base station may request another base station to search for the device. There may be a plurality of other base stations. As an example of the other base station, a base station neighboring on the switching source base station may be used, a base station belonging to the same TA as the switching source base station may be used, or a base station belonging to the same RNA as the switching source base station may be used. The request may include the information of (A) to (D) disclosed in Embodiment 1. The request may be issued by using signalling of an inter-base-station interface, for example, the Xn interface.

The base station that receives the request may instruct the UE belonging thereto to search for the device. The instruction may be the same as the instruction disclosed in Embodiment 1. For example, the instruction may include the information of (A) to (D) disclosed in Embodiment 1. The UE belonging to the base station may search for the device by using the information included in the instruction.

The base station that receives the request may instruct the UE belonging thereto to search for the device. The instruction may be the same as the instruction disclosed in Embodiment 1. For example, the instruction may include the information of (A) to (D) disclosed in Embodiment 1. The UE belonging to the base station may search for the device by using the information included in the instruction. The UE belonging to the base station may notify the base station, which has received the request, of the device search result. The notification may include the information on the device, for example, the information on the presence or absence of the device, or may include the information of (1) to (11) described above.

The base station that has received the request may notify the switching source base station of the device search result. The notification may include the information on the device, for example, the information on the presence or absence of the device, may include the information of (1) to (11) described above, or may include information on the UE that has searched for the device, for example, an identifier of the UE. By including the identifier of the UE, for example, the switching source base station can promptly determine the switching target UE.

The switching source base station notifies a base station (hereinafter, may be referred to as a switching target base station) to which the switching target UE is connected, of the switching of the device-connection destination. Signalling of the inter-base-station interface, for example, the Xn interface may be used for the notification. The notification may include the information of (a) to (f) described above.

The switching source base station may include information on the switching target UE, for example, an identifier of the switching target UE in the notification to the switching target base station. As a result, for example, the switching target base station can promptly detect the switching target UE, and signalling to the UE other than the switching target UE is not necessary, so that the amount of signalling between the base station and the UE can be reduced.

The switching source base station may transmit data related to the transmission and reception with the device to the switching target base station. As a result, for example, the connection destination base station does not necessary to reacquire the data, which is acquired from the device by the switching source base station, from the device, and as a result, the efficiency in the communication system can be improved.

The switching target base station notifies the switching target UE of the switching of the device-connection destination. The notification may include the information of (a) to (f) described above, or may include information (for example, the identifier of the UE) on the switching target UE.

The switching target UE may send a response to the notification to the switching target base station. The switching target base station may send a response to the notification from the switching source base station to the switching source base station.

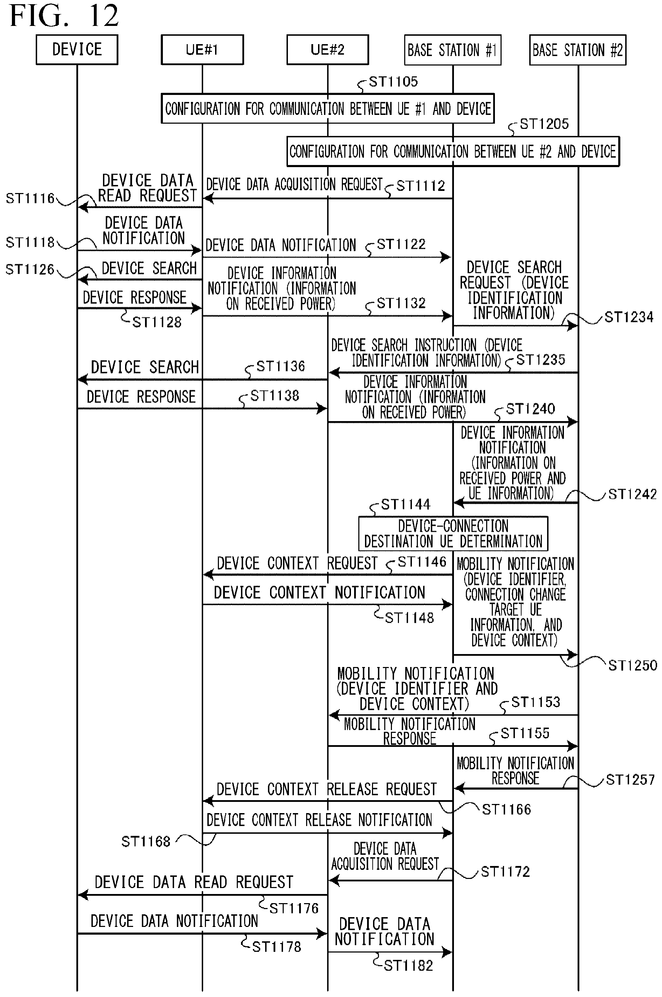

FIG. 12 is a sequence diagram showing an example of an operation of switching the device-connection destination UE and the connection destination base station, which is related to the communication between the UE and the device. In the example shown in FIG. 12, a case is shown in which the device-connection destination UE is switched from a UE #1 belonging to the base station #1 to a UE #2 belonging to the base station #2. In the example shown in FIG. 12, a case is shown in which the switching source base station determines whether or not to switch the device-connection destination UE. In the example shown in FIG. 12, the base station #1 corresponds to the switching source base station, and the base station #2 corresponds to the switching target base station. In FIG. 12, the same procedure as that shown in FIG. 11 is denoted by the same step number, and the common description will be omitted.

Step ST1105 shown in FIG. 12 is the same as that shown in FIG. 11. In step ST1205, the same procedure as that in step ST1105 is performed between the base station #2 and the UE #2.

Steps ST1112 to ST1132 shown in FIG. 12 are the same as those shown in FIG. 11.

In step ST1234 shown in FIG. 12, the base station #1 requests the base station #2 to search for the device. The request may include the information of (A) to (D) disclosed in Embodiment 1. In step ST1235, the base station #2 instructs the UE #2 to search for the device. The instruction may be the same as that in step ST1134 shown in FIG. 11. The instruction may include the information of (A) to (D) disclosed in Embodiment 1. The UE #2 starts the search for the device in response to step ST1235. Steps ST1136 and ST1138 are the same as those shown in FIG. 11. In step ST1240, the same procedure as that in step ST1142 shown in FIG. 11 is performed between the UE #2 and the base station #2.

In step ST1242 shown in FIG. 12, the base station #2 notifies the base station #1 of the information on the searched device acquired from the UE #2 in step ST1240. The notification may include the information on the device, for example, the information on the presence or absence of the device, may include the information of (1) to (11) described above, or may include the information on the UE that has searched for the device, for example, the identifier of the UE. In the example shown in FIG. 12, the notification in step ST1242 may include information on the UE #2.

Steps ST1144 to ST1148 shown in FIG. 12 are the same as those shown in FIG. 11. In the example shown in FIG. 12, the base station #1 determines to switch the UE to which the device is connected from the UE #1 to the UE #2 in step ST1144. The base station #1 may perform the determination based on one or both of the information included in the notification of step ST1132 and the information included in the notification of step ST1242.

In step ST1250 shown in FIG. 12, the base station #1 notifies the base station #2 of the switching of the device-connection destination UE. Signalling of the inter-base-station interface, for example, the Xn interface may be used for the notification. The notification may include the information of (a) to (f) described above, or may include information on the switching target UE, for example, identification information of the UE. In the example shown in FIG. 12, the information on the UE #2, for example, an identifier of the UE #2 may be included.

Steps ST1153 and ST1155 shown in FIG. 12 are the same as those shown in FIG. 11.

In step ST1257 shown in FIG. 12, the base station #2 sends a response to the base station #1 in step ST1250.

Steps ST1166 to ST1182 shown in FIG. 12 are the same as those shown in FIG. 11.

Another solution is disclosed. The switching target base station determines the switching target UE. As a result, for example, it is possible to prevent the device-connection destination switching to a high-load UE connected to the switching target base station, and as a result, it is possible to prevent an overload state of the UE.

The switching source base station may determine the switching target base station. The determination of the switching target base station by the switching source base station may be performed before the above-described determination of the switching target UE.

The switching source base station notifies the switching target base station of switching of the device-connection destination. The notification may include the information of (a) to (f) described above. The switching source base station may transmit the data related to the transmission and reception with the device to the switching target base station. The switching target base station may send a response to the notification from the switching source base station to the switching source base station.

The switching target base station may determine the switching target UE in response to the notification from the switching source base station. The device search result received from the UE belonging to the switching target base station may be used for the determination.

The switching target base station notifies the switching target UE of the switching of the device-connection destination. The notification may include the information of (a) to (f) described above, or may include information (for example, the identifier of the UE) on the switching target UE.

The switching target UE may send a response to the notification to the switching target base station.

The switching target base station requests the core NW device to switch a communication path from the communication network to the device. The request may be issued to the AMF. The request may include information indicating that the communication path of the device is switched, or may include information (for example, identification information) on the device. The switching may be, for example, switching from a path passing through the core NW, the switching source base station, the switching source UE, and the device to a path passing through the core NW, the switching target base station, the switching target UE, and the device. The core NW device may switch the communication path in response to the request. The core NW device may send a response to the request to the switching target base station.

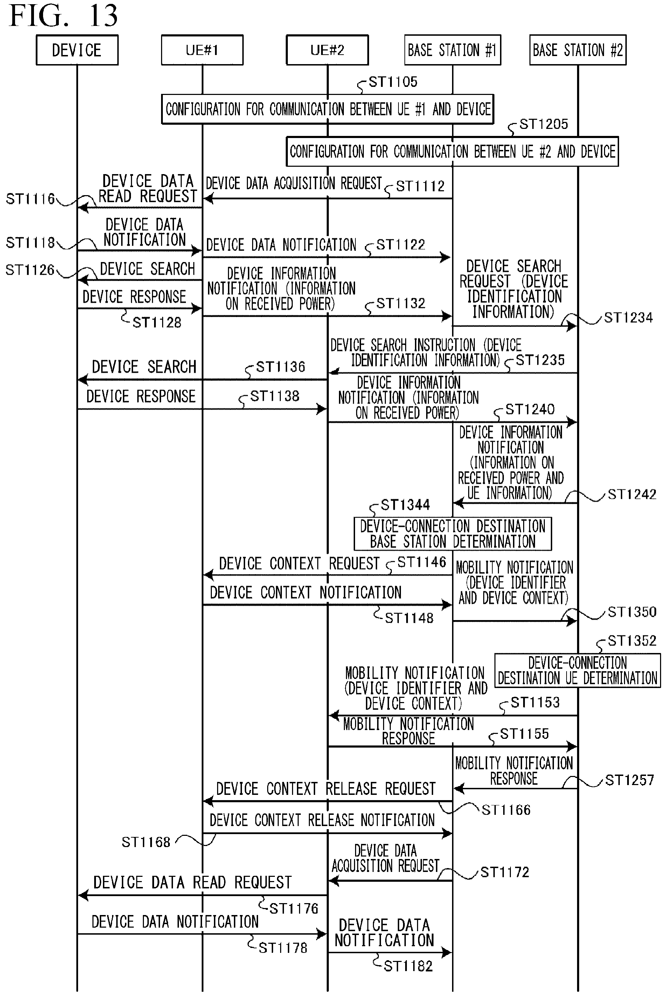

FIG. 13 is a sequence diagram showing another example of the operation of switching the device-connection destination UE and the connection destination base station, which is related to the communication between the UE and the device. In the example shown in FIG. 13, a case is shown in which the device-connection destination UE is switched from the UE #1 belonging to the base station #1 to the UE #2 belonging to the base station #2. In the example shown in FIG. 13, a case is shown in which the connection destination base station determines whether or not to switch the device-connection destination UE. As in the example shown in FIG. 12, in the example shown in FIG. 13, the base station #1 corresponds to the switching source base station, and the base station #2 corresponds to the switching target base station. In FIG. 13, the same procedures as those in FIGS. 11 and 12 are denoted by the same step numbers, and the common description will be omitted.

Step ST1105 shown in FIG. 13 is the same as that shown in FIG. 11. Step ST1205 is the same as that shown in FIG. 12.

Steps ST1112 to ST1132 shown in FIG. 13 are the same as those shown in FIG. 11. Steps ST1234 and ST1235 are the same as those shown in FIG. 12.

Steps ST1136 and ST1138 shown in FIG. 13 are the same as those shown in FIG. 11. Steps ST1240 and ST1242 are the same as those shown in FIG. 12.

In step ST1344 shown in FIG. 13, the base station #1 determines to switch the base station to which the device is connected. The base station #1 may perform the determination based on one or both of the information included in the notification of step ST1132 and the information included in the notification of step ST1242. In the example shown in FIG. 13, the device-connection destination base station is switched from the base station #1 to the base station #2. Steps ST1146 and ST1148 are the same as those shown in FIG. 11.

In step ST1350 shown in FIG. 13, the base station #1 notifies the base station #2 of the switching of the base station to which the device is connected. The notification may include the device context, or the notification may include information on the device (for example, an identifier of the device). In step ST1352, the base station #2 determines to switch the UE connected to the device from the UE #1 to the UE #2. The base station #2 may determine the switching target UE from among the UEs belonging to the base station #2 itself. The base station #2 may perform the determination based on the information included in the notification of step ST1240.

Steps ST1153 and ST1155 shown in FIG. 13 are the same as those shown in FIG. 11. Step ST1257 is the same as that shown in FIG. 12. Steps ST1166 to ST1182 are the same as those shown in FIG. 11.

The switching source base station may notify another base station of the device context. The other base station may include the switching target base station. The notification may be performed before the switching target UE is determined or before the switching target base station is determined. The request for the device context notification to the switching source UE from the switching source base station may be issued before the switching target UE is determined or before the switching target base station is determined. The notification of the device context from the switching source UE to the switching source base station may be issued before the switching target UE is determined or before the switching target base station is determined.

For example, the switching source base station may request the switching source UE to issue the device context notification in response to notification of information on power received from the device to the base station from the switching source UE. The switching source UE may notify the switching source base station of the device context in response to the request. The switching source base station may include the device context in the device search request and notify the switching target base station of the device context. New inter-base-station signalling for notification of the device context may be provided. The switching source base station may notify the device context using the new signalling. The other base station may perform the search for the device using the device context. As a result, for example, it is possible to promptly execute the procedure of switching the UE to which the device is connected. The notification of the switching of the device-connection destination UE from the switching source base station to the switching target base station may not include the device context. Accordingly, it is possible to reduce the amount of signalling of the notification.

For example, in FIG. 12, step ST1146 and step ST1148 may be performed between step ST1132 and step ST1234. The device context may be included in step ST1234. The same may apply to the example shown in FIG. 13 as well. The device context may not be included in step ST1250 shown in FIG. 12. The device context may not be included in step ST1350 shown in FIG. 13.

The switching source base station may request another base station to discard the device context. The switching source base station may transmit the request to a base station other than the switching target base station. For example, the switching source base station may perform the request in response to the determination of the connection destination UE or in response to the determination of the connection destination base station. The other base station may discard the device context in response to the request. As a result, for example, it is possible to reduce a memory usage amount in the other base station.

A validity period may be set for the device context, or the expiration date may be set for the device context. The validity period and/or the expiration date may be determined in advance by a standard, may be determined by the base station, or may be determined by the core NW device. The switching source base station may notify another base station of the information on the validity period and/or the expiration date. The switching source base station may include the information on the validity period and/or the expiration date in the device context and notify of the information. The other base station may discard the device context of which the validity period has expired or the expiration date has arrived. The switching target base station may not discard the device context in response to the notification of the switching of the device-connection destination UE. As a result, for example, a request for discarding the device context is not necessary, and as a result, the amount of signalling between the base stations can be reduced.

A timer of the device context may be provided. The timer may be provided for each device, may be provided for each UE, may be provided for each switching source base station, or may be provided for each switching target base station. The switching source base station may notify another base station of the information on the timer. The information on the timer may be included in the device context. The other base station may activate the timer in response to the acquisition of the device context. The other base station may discard the device context in response to the expiration of the timer. The switching target base station may stop the timer in response to the notification of the switching of the device-connection destination UE. As a result, for example, the same effects as described above can be obtained.

The device search request from the base station to another base station may be issued in response to the notification of the information on the measurement result of the device signal from the UE, or may be performed without being in response to the notification. For example, the base station may issue the request after the inter-base-station interface is established with another base station. As a result, for example, it is possible to promptly execute the procedure of switching the UE to which the device is connected. As another example, the request may be sent in response to a situation where the UE belonging to the base station cannot search for the device.

The base station may request the neighboring base station to stop the search for the device. The neighboring base station may instruct the UE belonging thereto to stop the search for the device, in response to the request. The instruction issued from the neighboring base station to the UE belonging thereto may be the same as the instruction disclosed in Embodiment 1. As a result, for example, it is possible to prevent the search for the device from being unnecessarily executed, and as a result, it is possible to improve the frequency/time resource use efficiency of the communication system.

According to Embodiment 2, even in a case where an appropriate connection destination UE belonging to the switching source base station is not present, it is possible to maintain the communication between the device and the communication network.

In a case where a UE other than the UE #1 belongs to the base station #1 and the UE is a more appropriate switching target UE compared to the UE #2 belonging to the base station #2, the device-connection destination may be switched to the other UE belonging to the base station #1 by the method described in Embodiment 1.

### Modification Example 1 of Embodiment 2.

Modification Example 1 discloses an operation in a case where the device-connection destination UE is switched to the UE connected to a different DU in the same base station.

In Modification Example 1, the CU of the base station to which the device-connection destination UE is connected determines the switching target UE and a DU (hereinafter, may be referred to as a switching target DU) connected to the UE. The CU may notify the switching target DU and/or the switching target UE of the switching of the UE-connection destination.

The DU may have the device context. The device context possessed by the DU may include a part or all of the device context disclosed in Embodiment 1.

The CU may request a DU (hereinafter, may be referred to as a switching source DU) connected to the switching source UE and/or the switching source UE, to notify of the device context. The switching source DU and/or the switching source UE may notify the CU of the device context. The notification may be performed in response to a request from the CU.

The CU notifies the switching target DU and/or the switching target UE of the switching of the device-connection destination. The switching target DU and/or the switching target UE may send a response to the notification to the CU. The notification may include the information of (a) to (f) described above, may include information (for example, identification information) on the switching source DU, may include information (for example, identification information) on the switching target DU, or may include information (for example, identification information) on the switching target UE.

The CU may request the switching source DU and/or the switching source UE to release the device context. The switching source DU and/or the switching source UE may release the device context in response to the request. The switching source DU and/or the switching source UE may send a response to the request.

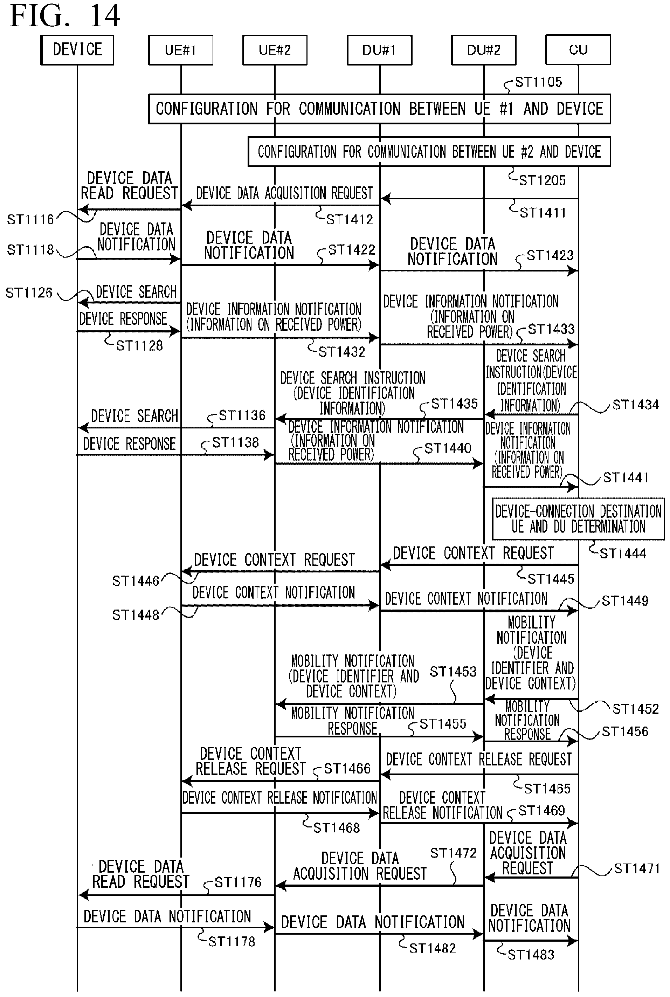

FIG. 14 is a sequence diagram showing an example of an operation of switching the device-connection destination UE and the connection destination DU, which is related to the communication between the UE and the device. In FIG. 14, the UE #1 is the switching source UE, the UE #2 is the switching target UE, a DU #1 is the switching source DU, and a DU #2 is the switching target DU. In FIG. 14, the DU #1 and the DU #2 constitute one base station together with the CU. In FIG. 14, the same procedures as those in FIGS. 11 and 12 are denoted by the same step numbers, and the common description will be omitted.

In step ST1105 shown in FIG. 14, the same procedure as step ST1105 shown in FIG. 11 is performed between the CU, the DU #1, and the UE #1. In step ST1205, the same procedure as in step ST1205 shown in FIG. 12 is performed between the CU, the DU #2, and the UE #2.

In step ST1411 and step ST1412 shown in FIG. 14, the same procedure as in step ST1112 shown in FIG. 11 is performed between the CU, the DU #1, and the UE #1. In step ST1422 and step ST1423, the same procedure as in step ST1122 shown in FIG. 11 is performed between the CU, the DU #1, and the UE #1. In step ST1432 and step ST1433, the same procedure as in step ST1132 shown in FIG. 11 is performed between the CU, the DU #1, and the UE #1.

In step ST1434 and step ST1435 shown in FIG. 14, the same procedure as step ST1134 shown in FIG. 11 is performed between the CU, the DU #2, and the UE #2. In step ST1440 and step ST1441, the same procedure as step ST1142 shown in FIG. 11 is performed between the CU, the DU #2, and the UE #2.

In step ST1444 shown in FIG. 14, the CU determines the device-connection destination UE and the connection destination DU. The CU may perform the determination based on one or both of the information included in the notification of step ST1433 and the information included in the notification of step ST1441. In step ST1445 and step ST1446, the same procedure as step ST1146 shown in FIG. 11 is performed between the CU, the DU #1, and the UE #1. In step ST1448 and step ST1449, the same procedure as in step ST1148 shown in FIG. 11 is performed between the CU, the DU #1, and the UE #1. The notification in step ST1449 may include the information on the device context possessed by the DU #1.

In step ST1452 and step ST1453 shown in FIG. 14, the same procedure as in step ST1153 shown in FIG. 11 is performed between the CU, the DU #2, and the UE #2. In step ST1455 and step ST1456, the same procedure as in step ST1155 shown in FIG. 11 is performed between the CU, the DU #2, and the UE #2.

In step ST1465 and step ST1466 shown in FIG. 14, the same procedure as step ST1166 shown in FIG. 11 is performed between the CU, the DU #1, and the UE #1. The DU #1 may release the device context of the DU in response to step ST1465. In step ST1468 and step ST1469, the same procedure as step ST1168 shown in FIG. 11 is performed between the CU, the DU #1, and the UE #1.

In step ST1471 and step ST1472 shown in FIG. 14, the same procedure as in step ST1172 shown in FIG. 11 is performed between the CU, the DU #2, and the UE #2. In step ST1482 and step ST1483, the same procedure as in step ST1182 shown in FIG. 11 is performed between the CU, the DU #2, and the UE #2.

According to Modification Example 1, even in a case where the deviceswitching target UE is a UE connected to a DU different from the DU to which the switching source UE is connected, it is possible to maintain the communication between the device and the communication network.

### Embodiment 3.

It is conceivable that the destination base station to which the UE that performs the communication with the device is connected may change. However, the mobility procedure of the UE involving the device is not disclosed. Therefore, there is an issue that the communication between the device and the communication system is disconnected due to the movement of the UE.

In the present embodiment, a method of solving such an issue is disclosed. In the present embodiment, a connection destination base station before the UE moves is referred to as a movement source base station, and a connection destination base station after the connection destination of the UE is changed due to the movement is referred to as a movement target base station.

In order to solve the above-described issue, in the present embodiment, information on the device is included in a handover request from the movement source base station to the movement target base station. The information related to the device may include the information for identifying the device (for example, a device identifier), or may include the configuration used for the communication between the UE and the device.

The handover request response (for example, a handover request affirmative response) from the movement target base station to the movement source base station may include the information on the device, or may include the configuration used for the communication between the UE and the device. The configuration included in the response may be determined by the movement target base station. The configuration included in the response may be different from the configuration included in the handover request from the movement source base station.

The handover command for the UE from the movement source base station may include a configuration for the communication between the UE and the device. The configuration included in the command may be the configuration determined by the movement target base station.

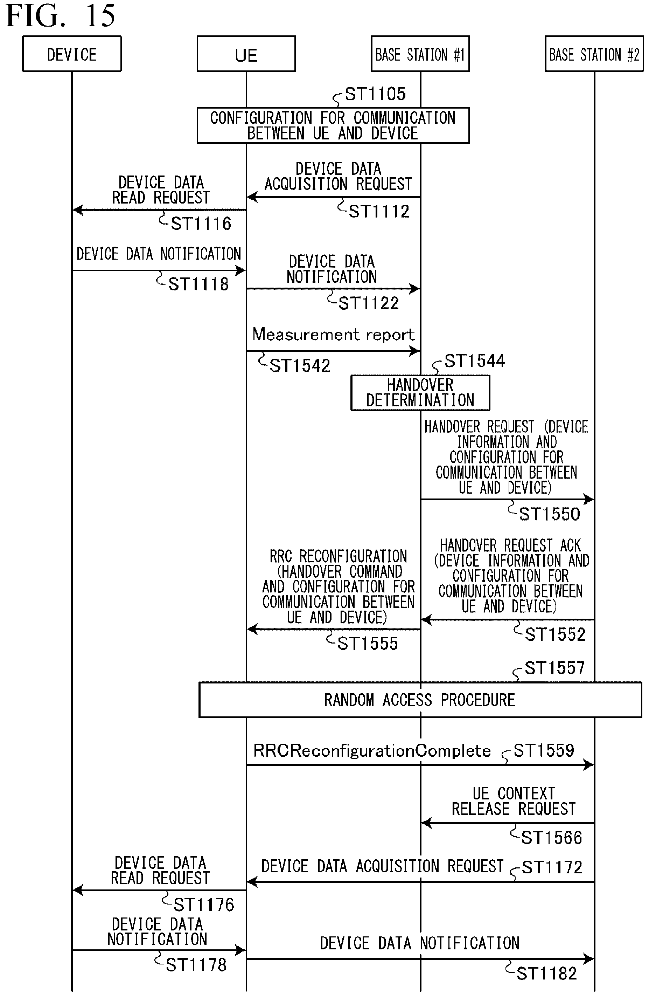

FIG. 15 is a sequence diagram showing an example of the handover operation of the UE that performs the communication with the device. In the example shown in FIG. 15, a case is shown in which the UE-connection destination base station is switched from the base station #1 to the base station #2. In FIG. 15, the same procedure as that shown in FIG. 11 is denoted by the same step number, and the common description will be omitted.

Steps ST1105 to ST1122 shown in FIG. 15 are the same as those shown in FIG. 11.

In step ST1542 shown in FIG. 15, the UE reports the measurement to the base station #1. Although not described in FIG. 15, the UE performs the measurement for obtaining the information (for example, the received power) used for determining whether or not to switch the connection destination base station at a predetermined timing. The UE notifies of the result of the measurement in the measurement report in step ST1542. In step ST1544, the base station #1 determines the handover of the UE to the base station #2. The base station #1 may perform the determination based on the measurement result notified in the measurement report in step ST1542.

In step ST1550 shown in FIG. 15, the base station #1 notifies the base station #2 of the handover request. The request in step ST1550 includes the information on the device. The information related to the device may include the information for identifying the device (for example, a device identifier), or may include the configuration used for the communication between the UE and the device.

In step ST1552 shown in FIG. 15, the base station #2 notifies the base station #1 of the handover request response. In the example shown in FIG. 15, step ST1552 is a handover request affirmative response. The response in step ST1552 may include the information on the device, or may include the configuration used for the communication between the UE and the device.

In step ST1555 shown in FIG. 15, the base station #1 issues a handover command to the UE. The command may be issued by using, for example, RRC reconfiguration signalling. The command may include the configuration used for the communication between the UE and the device. The configuration included in the command may be the configuration determined by the base station #2. The UE starts the handover procedure in response to step ST1555.

In step ST1557 shown in FIG. 15, the random access procedure is performed between the UE and the base station #2. In step ST1559, the UE notifies the base station #2 of a response to the handover command. RRC signalling, for example, RRC reconfiguration complete signalling may be used for the notification of the response. In step ST1566, the base station #2 requests the base station #1 to release a UE context. The base station #1 releases the UE context in response to the request.

Steps ST1172 to ST1182 shown in FIG. 15 are the same as those shown in FIG. 11.

The movement source base station may transmit a response to a UE context release request from the movement target base station. The response may be, for example, the notification of completion of the UE context release. For example, in FIG. 15, the base station #1 may notify the base station #2 of the completion of the UE context release. The notification from the base station #1 may be issued, for example, after step ST1566. As a result, for example, the movement target base station can detect the completion of the UE context in the movement source base station, and as a result, it is possible to prevent the malfunction in the communication system.

The transmission and reception between the UE and the device may be stopped. For example, the transmission and reception between the UE and the device may be stopped during the execution of the handover procedure of the UE. The transmission and reception may be resumed in response to the completion of random access procedure between the UE and the movement target base station. As a result, for example, it is possible to avoid the complexity in the communication system.

The UE may release the configuration related to the communication with the device. The UE may release the configuration in response to the handover command from the movement source base station. The UE may apply the configuration related to the communication with the device, which is included in the handover command in step ST1555, in response to the completion of the random access procedure with the movement target base station in step ST1557. The UE may apply the configuration included in the command. As a result, for example, it is possible to avoid the complexity in the communication system. As another example, the UE may apply the configuration in response to the reception of Msg2 of the random access procedure from the movement target base station. As a result, for example, it is possible to promptly resume the transmission and reception between the UE and the device.

As another example, the transmission and reception between the UE and the device may be continued. For example, even during the execution of the handover procedure of the UE, the transmission and reception between the UE and the device may be continued. The UE may continue the communication with the device by using the configuration related to the communication with the device. The configuration may include, for example, information on continuous scheduling (scheduling using a configured grant) related to the communication between the UE and the device.

The UE may store a configuration related to the communication with the device. The UE may store the configuration during the execution of the handover procedure of the UE itself. The configuration may be, for example, a configuration performed by the movement source base station. The UE may update the configuration at a timing when the communication with the device is suspended (for example, no transmission data), or may update the configuration in response to the completion of the random access procedure with the movement target base station.

As another example, the UE may update the configuration related to the communication with the device. The UE may update the configuration in response to the handover command from the movement source base station. The configuration may be, for example, a configuration performed by the movement target base station.

The UE may store the information received from the device. The information may include signalling from the device or may include data from the device. The UE may transmit the stored information to the movement target base station in response to the completion of the random access procedure with the movement target base station. As a result, for example, it is possible to avoid the complexity in the communication system. As another example, the UE may transmit the information to the movement target base station during the random access procedure. For example, the UE may include the information in Msg1 and/or Msg3 of the 4-step random access procedure to transmit the information, or may include the information in MsgA of the 2-step random access procedure to transmit the information. As a result, for example, the UE can promptly transmit the information.

The movement source base station may transfer data to be transmitted to the device to the movement target base station. The data may be, for example, data that cannot be transmitted to the UE due to the start of the handover procedure. The movement target base station may transmit the data from the movement source base station to the UE. The UE may transmit the data to the device. As a result, for example, it is possible to prevent omission of the data transmission from the communication network to the device.

The method disclosed in Embodiment 3 may be used for inter-DU handover. For example, signalling of a UE context setup request from the CU to the movement target DU may include the information on the device, or may include information on the configuration used for the communication between the UE and the device. The signalling of the UE context release request from the CU to the movement source DU may include information on the device or may include the device context. As a result, for example, even after the inter-DU mobility of the UE, it is possible to maintain the communication between the device and the communication system.

A combination of Embodiment 1 and Embodiment 3 may be used. For example, in the handover of the UE connected to the plurality of devices, some of the plurality of devices may continue the connection to the UE, and the remaining devices may switch the connection destination UE to another UE. The other UE may be a UE connected to the movement source base station of the UE that executes the handover. As a result, for example, it is possible to reduce the load on the UE.

As another example, the switching of the device-connection destination UE may be performed after the handover of the UE is executed. As a result, for example, the complexity of the communication system can be avoided.

The notification of the information on the measurement result of the signal from the device disclosed in Embodiment 1 may be given to the movement source base station, may be given to the movement target base station, or may be given to both the base stations. The notification operation may be performed at the time of the handover of the UE.

As another example, the UE may suspend the notification of the information on the measurement result of the signal from the device. For example, the UE may store the notification during the handover. The UE may restart the notification after the handover is completed. As a result, for example, the complexity of the procedure in the communication system can be avoided.

The instruction to search for the device may be issued by the movement source base station. The movement source base station may issue the instruction in response to the notification of the information on the measurement result of the signal from the device from the UE. As another example, the instruction to search for the device may be issued by the movement target base station. The movement target base station may issue the instruction in response to the notification of the information on the measurement result of the signal from the device from the UE.

The instruction to search for the device may be issued by the movement source base station or the movement target base station. For example, the instruction may be performed by the base station that has received the notification of the information on the measurement result of the signal from the device, which is issued by the UE. As a result, for example, the complexity of the communication system can be avoided.

The UE may transmit the data related to the device to the movement source base station. As a result, for example, the communication network can be promptly notified of the data related to the device. As another example, the UE may transmit data related to the device to the movement target base station. As a result, for example, the UE can transmit data to the base station having a stable communication quality, and as a result, it is possible to improve the reliability of the transmission of the data related to the device.

According to Embodiment 3, it is possible to maintain the communication between the device and the communication system even after the mobility of the UE.

In the present disclosure, the search for the device has been disclosed, but the confirmation of the device may be performed, or the detection of the device may be performed.

In the communication system according to the present disclosure, one or a plurality of cells are formed in one gNB. In the present disclosure, the gNB or the cell is described, but either the gNB or the cell may be used unless otherwise specified.

In the present disclosure, the gNB may be the MCG or the SCG.

Each of the above-described embodiments and the modification examples thereof is merely an example, and the respective embodiments and the modification examples thereof can be freely combined. In addition, any component of each of the embodiments and the modification examples thereof can be changed or omitted as appropriate.

For example, in each of the above-described embodiments and the modification examples thereof, the slot is an example of the time unit of communication in the 5th generation communication system. The slot may be a unit of scheduling. In each of the above-described embodiments and the modification examples thereof, the procedure described in the units of the slot may be performed in units of a TTI, units of a subframe, units of a subslot, or units of a mini-slot.

For example, the methods disclosed in the above-described embodiments and the modification examples thereof may be applied to the IAB. The methods disclosed in the above-described embodiments and the modification examples thereof may be applied to the communication between the IAB donor and the IAB node. The methods disclosed in the above-described embodiments and the modification examples thereof may be applied to a procedure in which the Uu is used in the IAB.

For example, the methods disclosed in the above-described embodiments and the modification examples thereof may be applied to the communication between the UEs or between the UE and the NW through the relay using the SL communication.

For example, the methods disclosed in each of the above-described embodiments and the modification examples thereof are not limited to the vehicle-toeverything (V2X) service, and may be applied to a service in which the SL communication is used. For example, the methods disclosed in each of the above-described embodiments and the modification examples thereof may be applied to SL communication used in various services such as a proximity-based service, public safety, communication between wearable terminals, and communication between devices in a factory.

Hereinafter, various aspects of the present disclosure will be collectively described as supplementary notes.

### (Supplementary Note 1)

A communication system including: a base station configured to be compatible with a 5th generation radio access system; a communication terminal configured to be connected to the base station; and a device configured to be connected to the base station or the communication terminal, in which, in a state where the device is connected to the communication terminal, the base station acquires information on a state of communication between the communication terminal and the device and information on a state of reception of a signal transmitted by the device at another communication terminal different from the communication terminal, determines whether or not it is necessary to switch destination communication terminals to which the device is connected, based on one or both of the acquired information on the state of communication and the acquired information on the state of reception, and determines a switching target communication terminal when it is necessary to switch the destination communication terminal to which the device is connected.

### (Supplementary Note 2)

The communication system according to Supplementary Note 1, in which the base station acquires the information on the state of reception from a communication terminal connected to another base station via the other base station, and notifies the other base station of information on the determined switching target communication terminal in a case where the switching target communication terminal, which is determined when it is necessary to switch the target communication terminal to which the device is connected, is connected to the other base station.

### (Supplementary Note 3)

The communication system according to Supplementary Note 1 or 2, in which the base station is composed of a central unit and one or more distributed units, the communication terminal is connected to the distributed unit, and the central unit determines whether or not it is necessary to switch the destination communication terminal to which the device is connected, based on one or both of the information on the state of communication and the information on the state of reception, determines the switching target communication terminal when it is necessary to switch the destination communication terminal to which the device is connected, and notifies the distributed unit to which the determined communication terminal is connected of information on the device.

### (Supplementary Note 4)

A communication system including: a base station configured to be compatible with a 5th generation radio access system; a communication terminal configured to be connected to the base station; and a device configured to be connected to the base station or the communication terminal, in which, in a state where the device is connected to the communication terminal, the base station acquires information on a state of communication between the communication terminal and the device and information on a state of reception of a signal transmitted by the device at another communication terminal different from the communication terminal, determines whether or not it is necessary to switch a destination communication terminal to which the device is connected, based on one or both of the acquired information on the state of communication and the acquired information on the state of reception, and notifies another base station to which the other communication terminal is connected of information on the device when it is necessary to switch the destination communication terminal to which the device is connected, and the other base station determines a new destination communication terminal to which the device is connected, based on the information notified from the base station.

### (Supplementary Note 5)

The communication system according to any one of Supplementary Notes 1 to 4, in which, when a communication terminal belonging to the base station, to which the device is connected, executes a handover, the base station transmits a handover request including information on the device connected to the communication terminal that executes the handover to another base station that is a handover target.

### (Supplementary Note 6)

A base station that constitutes a communication system configured to be compatible with a 5th generation radio access system and to which a communication terminal configured to be communicable with a device is connected, in which, in a state where the device is connected to the communication terminal, the base station acquires information on a state of communication between the communication terminal and the device and information on a state of reception of a signal transmitted by the device at another communication terminal different from the communication terminal, determines whether or not it is necessary to switch a destination communication terminal to which the device is connected, based on one or both of the acquired information on the state of communication and the acquired information on the state of reception, and determines a switching target communication terminal when it is necessary to switch the destination communication terminal to which the device is connected.

### REFERENCE SIGNS LIST

202 Communication terminal device (user equipment)
210 Communication system
213, 240-1, 240-2, 750 Base station device (NG-RAN NodeB, base station)
214 5G core unit
215 Central unit
216 Distributed unit
217 Central unit for control plane
218 Central unit for user plane
219 TRP
301, 403 Protocol processing unit
302 Application unit
304, 405 Encoder unit
305, 406 Modulation unit
306, 407 Frequency conversion unit
307-1 to 307-4, 408-1 to 408-4 Antenna
308, 409 Demodulation unit
309, 410 Decoder unit
310, 411, 526 Control unit
401 EPC communication unit
402 Other-base station communication unit
412 5GC communication unit
521 Data network communication unit
522 Base station communication unit
523 User plane communication unit
523-1 PDU processing unit
523-2 Mobility anchoring unit
525 Control plane control unit
525-1 NAS security unit
525-2 Idle state mobility management unit
527 Session management unit
527-1 PDU session control unit
527-2 UE IP address allocation unit
751-1 to 751-8 Beam
752 Cell

## Claims

1. A communication system comprising:
a base station configured to be compatible with a 5th generation radio access system;
a communication terminal configured to be connected to the base station; and
a device configured to be connected to the base station or the communication terminal,
wherein, in a state where the device is connected to the communication terminal,
the base station acquires information on a state of communication between the communication terminal and the device and information on a state of reception of a signal transmitted by the device at another communication terminal different from the communication terminal, determines whether or not it is necessary to switch a destination communication terminal to which the device is connected, based on one or both of the acquired information on the state of communication and the acquired information on the state of reception, and determines a switching target communication terminal when it is necessary to switch the destination communication terminal to which the device is connected.

2. The communication system according to claim 1,
wherein the base station acquires the information on the state of reception from a communication terminal connected to another base station via the other base station, and notifies the other base station of information on the determined switching target communication terminal in a case where the switching target communication terminal, which is determined when it is necessary to switch the destination communication terminal to which the device is connected, is connected to the other base station.

3. The communication system according to claim 1 or 2,
wherein the base station is composed of a central unit and one or more distributed units,
the communication terminal is connected to the distributed unit, and
the central unit determines whether or not it is necessary to switch the destination communication terminal to which the device is connected, based on one or both of the information on the state of communication and the information on the state of reception, determines the switching target communication terminal when it is necessary to switch the destination communication terminal to which the device is connected, and notifies the distributed unit to which the determined communication terminal is connected of information on the device.

4. A communication system comprising:
a base station configured to be compatible with a 5th generation radio access system;
a communication terminal configured to be connected to the base station; and
a device configured to be connected to the base station or the communication terminal,
wherein, in a state where the device is connected to the communication terminal,
the base station acquires information on a state of communication between the communication terminal and the device and information on a state of reception of a signal transmitted by the device at another communication terminal different from the communication terminal, determines whether or not it is necessary to switch a destination communication terminal to which the device is connected, based on one or both of the acquired information on the state of communication and the acquired information on the state of reception, and notifies another base station to which the other communication terminal is connected of information on the device when it is necessary to switch the destination communication terminal to which the device is connected, and the other base station determines a new destination communication terminal to which the device is connected, based on the information notified from the base station.

5. The communication system according to any one of claims 1 to 4,
wherein, when a communication terminal belonging to the base station, to which the device is connected, executes a handover, the base station transmits a handover request including information on the device connected to the communication terminal that executes the handover to another base station that is a handover target.

6. A base station that constitutes a communication system configured to be compatible with a 5th generation radio access system and to which a communication terminal configured to be communicable with a device is connected,
wherein, in a state where the device is connected to the communication terminal,
the base station acquires information on a state of communication between the communication terminal and the device and information on a state of reception of a signal transmitted by the device at another communication terminal different from the communication terminal, determines whether or not it is necessary to switch a destination communication terminal to which the device is connected, based on one or both of the acquired information on the state of communication and the acquired information on the state of reception, and determines a switching target communication terminal when it is necessary to switch the destination communication terminal to which the device is connected.
